# EUROPEAN PATENT SPECIFICATION

(11) **EP 3 197 139 B1**
(45) Date of publication and mention of the grant of the patent: **11.12.2019**
(21) Application number: 17151545.5
(22) Date of filing: 16.01.2017
(51) Int. Cl.: H04M 3/42, G10L 15/26, H04M 3/56

(54) **INFORMATION PROCESSING SYSTEM, INFORMATION PROCESSING DEVICE, AND INFORMATION PROCESSING METHOD**
INFORMATIONSVERARBEITUNGSSYSTEM, INFORMATIONSVERARBEITUNGSVORRICHTUNG UND INFORMATIONSVERARBEITUNGSVERFAHREN
SYSTÈME DE TRAITEMENT DES INFORMATIONS, DISPOSITIF DE TRAITEMENT DES INFORMATIONS ET PROCÉDÉ DE TRAITEMENT D'INFORMATIONS

(30) Priority: 20.01.2016 JP 2016008720
(43) Date of publication of application: 26.07.2017
(73) Proprietor: Ricoh Company, Ltd., Tokyo 143-8555 (JP)
(72) Inventor: MURATA, Jun, Tokyo, 143-8555 (JP)
(74) Representative: SSM Sandmair

(56) References cited:
- WO-A1-2006/089355
- US-A- 6 100 882

## Description

### BACKGROUND OF THE INVENTION

### 1. Field of the Invention

The present invention relates to an information processing system, an information processing device, and an information processing method.

### 2. Description of the Related Art

A meeting minutes generating and reproducing system is known in which a state of a meeting or the like is recorded as voice or video and a text input in parallel with the progress of the meeting is recorded by adding elapsed time information from the start of the input to the text (e.g., Japanese Unexamined Patent Application Publication No. 2008-172582). The meeting minutes generating and reproducing system is capable of displaying a part of the text corresponding to an elapsed time at the time of reproducing the recoded voice or video. Moreover, by specifying a part of the text, the voice or the video can be reproduced from a position corresponding to the specified part.

Let us consider here a case where each member participating in a meeting records the state of the meeting as voice. In this case, the voice that can be recorded largely depends on the position and performance of a microphone that each member uses for recording, and it is generally difficult for each member to evenly record remarks of all the members. Therefore, even if the meeting minutes are respectively generated based on the voice recorded by each member, the generated meeting minutes are fragmentary, and it is therefore not easy to grasp a flow of the whole meeting from each of the meeting minutes.

In view of the above conventional problem, there is a need to facilitate the generation of the meeting minutes based on the recorded voice.

WO 2006/089355 A1 discloses a system for producing a transcript of a meeting comprising a plurality of attendees in which meaning extraction component is assigned to each data input device via a dispatcher component located on a server.

US 6,100,882 discloses a computer workstation supporting speech recognition software and conferencing software, and is involved in an audio conference with one or more other workstations. Speech from the user at that workstation is transmitted to the other workstation(s), and also converted into text by the speech recognition software. The conferencing software then transmits the text to the other workstation(s). Likewise, the conferencing software also receives the text equivalent of spoken contributions from the other workstation(s). This received text, together with the locally generated text, is stored in a text file so as to produce a set of minutes for the audio conference.

### SUMMARY OF THE INVENTION

The scope of the invention is defined by the appended claims. Any reference to "embodiment(s)", "example(s)" or "aspect(s) of the invention" in this description not falling under the scope of the claims should be interpreted as illustrative example(s) for understanding the invention.

### BRIEF DESCRIPTION OF THE DRAWINGS

FIG. 1 is a block diagram illustrating a configuration of an example of an information processing system commonly applicable to embodiments;
FIG. 2 is a block diagram illustrating a hardware configuration of an example of a server commonly applicable to the embodiments;
FIG. 3 is a block diagram illustrating a hardware configuration of an example of a terminal device commonly applicable to the embodiments;
FIG. 4 is a diagram schematically illustrating a flow of processing of an information processing system according to a first embodiment;
FIG. 5 is a functional block diagram of an example for explaining a function of a server according to the first embodiment;
FIG. 6 is a functional block diagram of an example for explaining a function of a terminal device according to the first embodiment;
FIG. 7 is a diagram for explaining a flow of processing of the information processing system according to the first embodiment;
FIG. 8 is a flowchart illustrating an example of processing in the terminal device according to the first embodiment;
FIG. 9 is a diagram illustrating an example of a text conversion tool screen according to the first embodiment;
FIG. 10 is a diagram for explaining text conversion processing of sound data according to the first embodiment;
FIG. 11 is a flowchart illustrating an example of processing in the server according to the first embodiment;
FIG. 12 is a diagram illustrating an example of a time series display screen according to the first embodiment;
FIG. 13 is a diagram schematically illustrating a flow of processing of an information processing system according to a second embodiment;
FIG. 14 is a diagram for explaining a flow of processing of the information processing system according to the second embodiment;
FIG. 15 is a flowchart illustrating an example of processing of a terminal device according to the second embodiment;
FIG. 16 is a flowchart illustrating an example of processing of a server corresponding to transmission of a second text according to the second embodiment;
FIG. 17 is a flowchart illustrating an example of association processing of words included in a first text with respect to the second text according to the second embodiment;
FIG. 18 is a diagram for explaining search processing according to the second embodiment;
FIG. 19 is a diagram for more specifically explaining the association processing according to the second embodiment;
FIG. 20 is a flowchart illustrating an example of association processing of words included in a plurality of first texts with respect to the second text according to a modification of the second embodiment;
FIG. 21 is a diagram for more specifically explaining the association processing according to the modification of the second embodiment;
FIG. 22 is a diagram illustrating an example of result data output based on a result of the association processing according to the modification of the second embodiment;
FIG. 23 is a diagram illustrating an example of a time series display screen according to the modification of the second embodiment;
FIG. 24 is a functional block diagram for explaining a function of a server according to a third embodiment;
FIG. 25 is a diagram illustrating an example of a project selection screen according to the third embodiment;
FIG. 26 is a functional block diagram for explaining a function of a project management unit according to the third embodiment;
FIG. 27 is a functional block diagram of an example for explaining a function of a text processing unit according to the third embodiment;
FIG. 28 is a diagram illustrating an example of a main screen according to the third embodiment;
FIG. 29 is a diagram illustrating an example of a display of a text conversion tool screen according to the third embodiment;
FIG. 30 is a diagram illustrating an example of a time management area according to the third embodiment; and
FIG. 31 is a diagram illustrating an example of meeting minutes data according to the third embodiment.

The accompanying drawings are intended to depict exemplary embodiments of the present invention and should not be interpreted to limit the scope thereof. Identical or similar reference numerals designate identical or similar components throughout the various drawings.

### DESCRIPTION OF THE EMBODIMENTS

The terminology used herein is for the purpose of describing particular embodiments only and is not intended to be limiting of the present invention.

As used herein, the singular forms "a", "an" and "the" are intended to include the plural forms as well, unless the context clearly indicates otherwise.

In describing preferred embodiments illustrated in the drawings, specific terminology may be employed for the sake of clarity. However, the disclosure of this patent specification is not intended to be limited to the specific terminology so selected, and it is to be understood that each specific element includes all technical equivalents that have the same function, operate in a similar manner, and achieve a similar result.

Exemplary embodiments of an information processing system, an information processing device, and an information processing method will be explained in detail below with reference to the accompanying drawings.

### Configuration Common to Embodiments

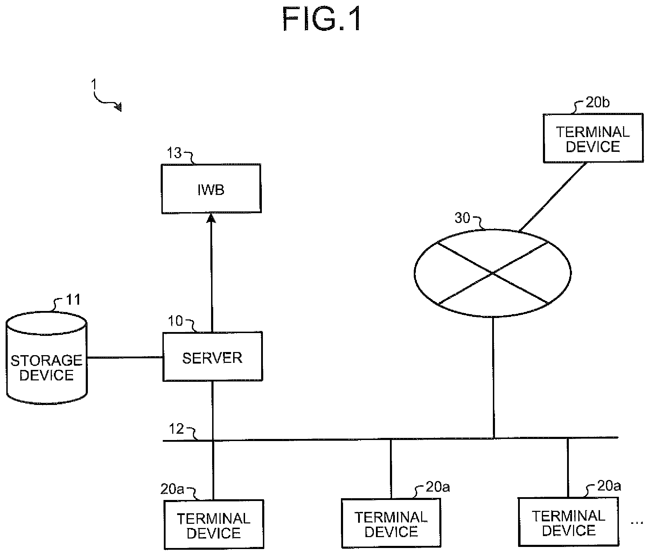

FIG. 1 represents a configuration of an example of an information processing system commonly applicable to embodiments. As illustrated in FIG. 1, an information processing system 1 includes a server 10 as an information processing device and a plurality of terminal devices 20a, 20a, ··· which are connected to the server 10 through a network 12 such as a local area network (LAN). The information processing system 1 may further include one or more terminal devices 20b which are connected to the server 10 through an external network 30 such as the Internet.

The server 10 is connected with a storage device 11 including, for example, a hard disk drive. The server 10 stores data transmitted from, for example, the terminal devices 20a, 20a, ···, 20b in the storage device 11.

A display device is connected to the server 10. In the example of FIG. 1, as the display device, an interactive whiteboard (IWB) 13 which is an electronic blackboard is connected to the server 10. The server 10 generates display information based on the data transferred from, for example, the terminal devices 20a, 20a, ···, 20b and supplies the generated display information to the IWB 13. The IWB 13 displays a screen according to the display information supplied from the server 10.

In the example of FIG. 1, it is illustrated that the IWB 13 is connected directly to the server 10, however, the connection is not limited to this example, and the IWB 13 may be connected to the network 12. In the example of FIG. 1, it is illustrated that the terminal devices 20a, 20a, ··· are connected to the network 12 by cable, however, the connection is not limited to this example, and the terminal devices 20a, 20a, ··· may be connected wirelessly to the network 12. Moreover, the network 12 itself may be constituted by a network of wireless communication.

Herein, the terminal devices 20a, 20a, ···, 20b are assumed to be used by respective members participating in the same meeting. At this time, for example, the terminal devices 20a, 20a, ··· are assumed to be used in the same room. It is assumed that the terminal device 20b is used in a remote place with respect to the room and shares the meeting with the terminal devices 20a, 20a, ··· through, for example, the network 30 in a known remote conference system.

Each of the terminal devices 20a, 20a, ···, 20b is assumed to have a microphone built therein or connected thereto and to be capable of recording. Herein, the terminal devices 20a, 20a, ··· are used in the same room, but there may be a case in which the terminal devices 20a, 20a, ··· cannot evenly record voices as remarks of the members depending on positions of the terminal devices 20a, 20a, ··· and performance of the microphones. The same goes for the terminal device 20b connected by the remote conference system.

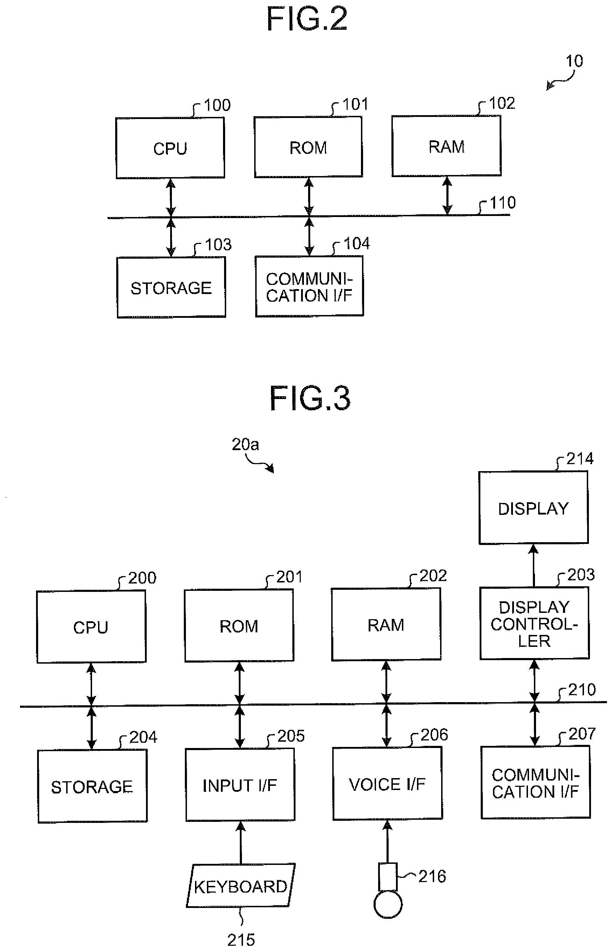

FIG. 2 represents a hardware configuration of an example of the server 10 commonly applicable to the embodiments. As illustrated in FIG. 2, the server 10 includes a central processing unit (CPU) 100, a read-only memory (ROM) 101, a random access memory (RAM) 102, a storage 103, and a communication interface (I/F) 104, which are communicably connected to each other through a bus 110.

The storage 103 includes a hard disk drive and a nonvolatile semiconductor memory, and stores various programs and data for use in operation of the CPU 100. The ROM 101 previously stores, for example, programs and data used for activation of the server 10.

The CPU 100 controls the whole operation of the server 10 by using the RAM 102 as a work area according to programs stored in the storage 103 and the ROM 101. The communication I/F 104 controls communication via the network 12 according to an instruction of the CPU 100. The communication I/F 104 also controls communication with the storage device 11. The storage device 11 may be used as the storage 103. Moreover, the communication I/F 104 controls the communication with the IWB 13 when the IWB 13 is directly connected to the server 10.

FIG. 3 represents a hardware configuration of an example of the terminal device 20a commonly applicable to the embodiments. Because the terminal device 20b can be implemented by the same configuration as that of the terminal device 20a, the terminal device 20a will be explained as a representative unless otherwise specified.

The terminal device 20a can be configured as, for example, a general personal computer. As illustrated in FIG. 3, the terminal device 20a includes a CPU 200, a ROM 201, a RAM 202, a display controller 203, a storage 204, an input I/F 205, a voice I/F 206, and a communication I/F 207, which are communicably connected to each other through a bus 210.

The storage 204 includes a hard disk drive or a nonvolatile semiconductor memory, and stores various programs and data for use in operation of the CPU 200. The ROM 201 previously stores, for example, programs and data used for activation of the terminal device 20a. The CPU 200 operates by using the RAM 202 as a work area and controls the whole operation of the terminal device 20a according to programs stored in the storage 204 and the ROM 201.

The display controller 203 is connected with a display 214, and generates a display control signal that can be displayed by the display 214 based on display information generated by the CPU 200 according to the program. The display controller 203 supplies the generated display control signal to the display 214. The display 214 includes a display device such as a liquid crystal display (LCD) and a drive unit that drives the display device according to the display control signal.

The input I/F 205 is an interface for receiving an input of data for the terminal device 20a, and can apply, for example, a Universal Serial Bus (USB). In the example of FIG. 3, a keyboard 215 is connected to the input I/F 205. As the input I/F 205, it is also possible to use a touch sensor that outputs a signal corresponding to a pressed or contacted position. In this case, the touch panel can be constituted by integrally forming the display 214 and the touch sensor.

The voice I/F 206 receives an input of a sound signal in an analog format and converts the input sound signal into sound data in a digital format. In the example of FIG. 3, a microphone 216 that picks up the sound and outputs the analog sound signal is connected to the voice I/F 206. The microphone 216 may be built in the terminal device 20a or may be connected to a terminal device 20a as an external device.

The communication I/F 207 controls communication via the network 12 according to the instruction of the CPU 200.

Although it is explained herein that the terminal device 20a is a personal computer, the device is not limited to this example. For example, the terminal device 20a may be a tablet computer or a multifunctional mobile phone terminal (smartphone). The terminal device 20a can omit the voice I/F 206 depending on the intended use in the information processing system 1.

### First Embodiment

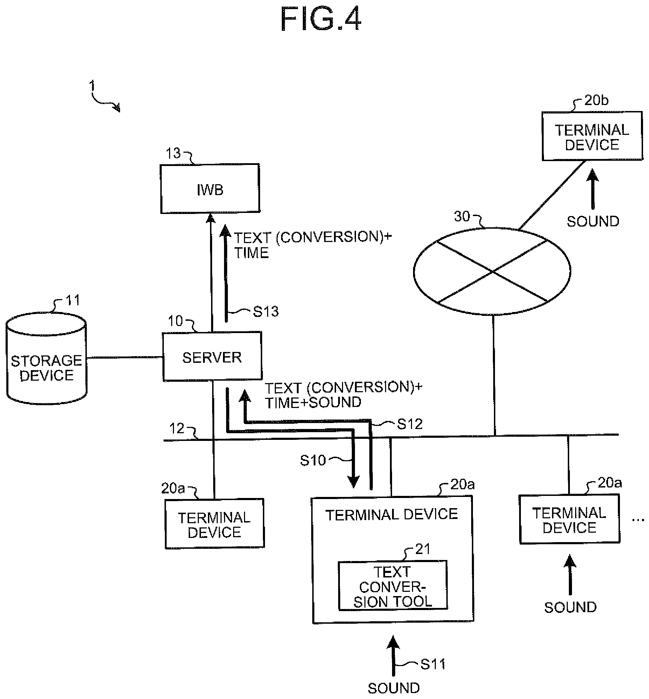

A first embodiment will be explained next. FIG. 4 schematically represents a flow of processing of the information processing system 1 according to the first embodiment. As illustrated in FIG. 4, the same reference signs are assigned to the portions common to these of FIG. 1, and detailed explanation thereof is omitted. Hereinafter, it is assumed that "sound" represents all sounds including human voice and "voice" represents a sound produced by the human voice.

In the first embodiment, the server 10 provides a text conversion tool 21 that converts a part related to a voice included in sound data into text information to the terminal devices 20a, 20a, ···, 20b (Step S10). In the example of FIG. 4, one terminal device 20a among the terminal devices 20a, 20a, ···, 20b is focused on to be represented, for the sake of explanation. The text conversion tool 21 is previously stored in, for example, the storage 103 of the server 10.

The terminal device 20a picks up sounds produced in the meeting including voices due to, for example, remarks of the members using the text conversion tool 21 (Step S11), and converts a voice portion included in the picked up sounds into text information. At this time, the text conversion tool 21 adds time information indicating a position (time) of the voice corresponding to the text information, within the sound data, to the converted text information.

The text conversion tool 21 transmits the voice-converted text and the time information associated with the text to the server 10 (Step S12). The server 10 generates display information for displaying texts along a time series based on the texts and the time information transmitted from the terminal device 20a. The server 10 transmits the display information based on the texts and the time information to the IWB 13 (Step S13). The IWB 13 displays the texts along the time series according to the display information.

The processes at Step S10 to Step S13 are performed in each of the terminal devices 20a, 20a, ···, 20b participating in the same meeting. Thereby, the texts based on the sounds picked up by each of the terminal devices 20a, 20a, ···, 20b are displayed respectively along the time series on the IWB 13. Therefore, the members participating in the meeting are able to more easily grasp the progress of the proceedings.

### Details of First Embodiment

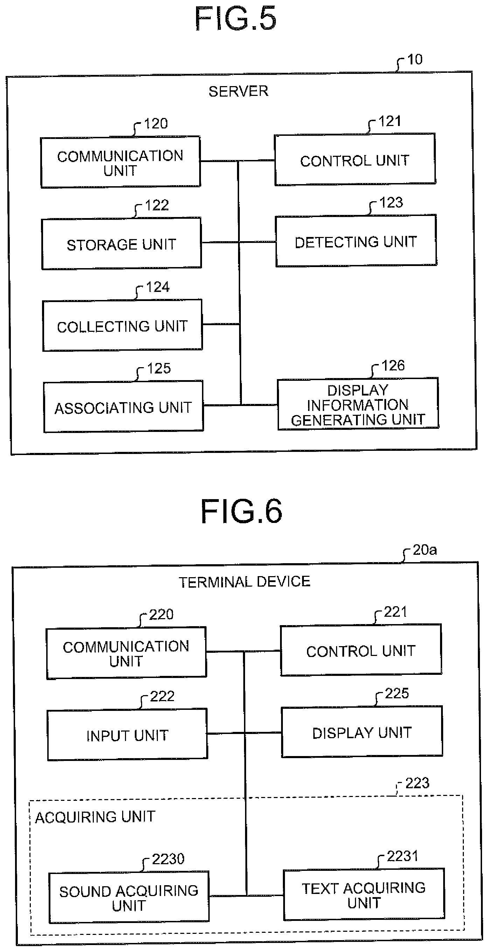

FIG. 5 is a functional block diagram of an example for explaining a function of the server 10 according to the first embodiment. As illustrated in FIG. 5, the server 10 includes a communication unit 120, a control unit 121, a storage unit 122, a detecting unit 123, a collecting unit 124, an associating unit 125, and a display information generating unit 126.

The communication unit 120, the control unit 121, the storage unit 122, the detecting unit 123, the collecting unit 124, the associating unit 125, and the display information generating unit 126 are implemented by the program operating on the CPU 100. However, part of or whole of the communication unit 120, the control unit 121, the storage unit 122, the detecting unit 123, the collecting unit 124, the associating unit 125, and the display information generating unit 126 may be constituted by a hardware circuit operating in cooperation with each other.

The control unit 121 integrally controls the respective operations of the communication unit 120, the control unit 121, the storage unit 122, the detecting unit 123, the collecting unit 124, the associating unit 125, and the display information generating unit 126. The communication unit 120 controls communication by the communication I/F 104. The storage unit 122 controls write and read of data to and from the storage device 11 and the storage 103. The detecting unit 123 compares two texts to detect corresponding parts. The collecting unit 124 collects the texts and time information transmitted from the terminal devices 20a, 20a, ···, 20b. The associating unit 125 associates the text with the time information. The display information generating unit 126 generates display information for forming a screen to be displayed on, for example, the IWB 13.

The programs for implementing the functions in the server 10 are provided by being recorded in a computer-readable recording medium such as a compact disk (CD), a flexible disk (FD), and a digital versatile disk (DVD) in an installable file format or an executable file format. However, the programs may be provided by being stored on a computer connected to a network such as the Internet and being downloaded via the network. The programs may be configured so as to be provided or distributed via a network such as the Internet.

The programs are configured as modules including the units (the communication unit 120, the control unit 121, the storage unit 122, the detecting unit 123, the collecting unit 124, the associating unit 125, and the display information generating unit 126). Actual hardware is configured so that the CPU 100 reads the programs from the recording medium such as the storage 103 and implements the programs, the units are thereby loaded into a main storage device such as the RAM 102, and the communication unit 120, the control unit 121, the storage unit 122, the detecting unit 123, the collecting unit 124, the associating unit 125, and the display information generating unit 126 are generated in the main storage device.

In the first embodiment, the functions of the detecting unit 123 and the associating unit 125 can be omitted.

FIG. 6 is a functional block diagram of an example for explaining a function of the terminal device 20a according to the first embodiment. Because the terminal device 20b includes the same function as that of the terminal device 20a, explanation thereof is omitted herein. As illustrated in FIG. 6, the terminal device 20a includes a communication unit 220, a control unit 221, an input unit 222, an acquiring unit 223, and a display unit 225. The acquiring unit 223 includes a sound acquiring unit 2230 and a text acquiring unit 2231.

The communication unit 220, the control unit 221, the input unit 222, the acquiring unit 223, and the display unit 225 are implemented by the program operating on the CPU 200. However, the communication unit 220, the control unit 221, the input unit 222, and the display unit 225 among the communication unit 220, the control unit 221, the input unit 222, the acquiring unit 223, and the display unit 225 may be constituted by a hardware circuit operating in cooperation with each other.

The control unit 221 integrally controls the respective operations of the communication unit 220, the input unit 222, the acquiring unit 223, and the display unit 225. The communication unit 220 controls communication by the communication I/F 207. The input unit 222 receives an input performed on the input I/F 205. The display unit 225 generates display information to be displayed on the display 214.

The acquiring unit 223 corresponds to the text conversion tool 21 as explained in FIG. 4. The program acquired by being downloaded from the server 10 via the network 12 is executed on the CPU 200, and the sound acquiring unit 2230 and the text acquiring unit 2231 included in the acquiring unit 223 are thereby loaded into the main storage device such as the RAM 202, so that these units are generated in the main storage device. The acquiring unit 223 is introduced from the server 10 to the terminal device 20a using, for example, a technology called ActiveX (registered trademark) when an operating system (OS) installed in the terminal device 20a is Windows (registered trademark).

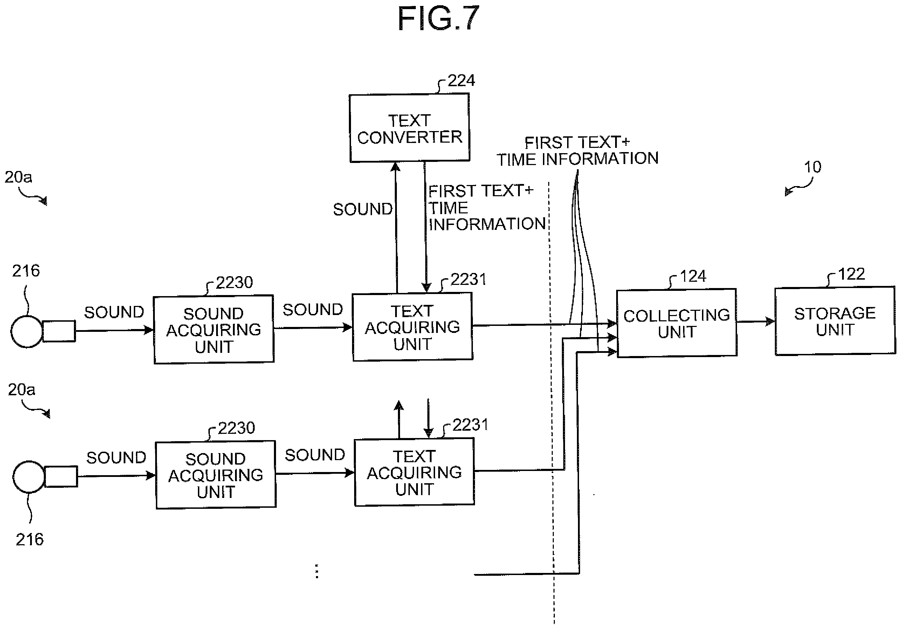

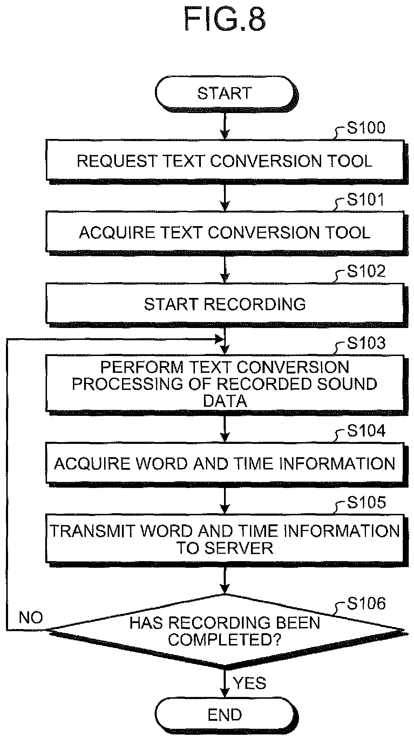

The processing in the information processing system 1 according to the first embodiment will be explained in more detail next with reference to FIG. 7 and FIG. 8. FIG. 7 is a diagram for explaining a flow of processing of the information processing system 1 according to the first embodiment. FIG. 8 is a flowchart illustrating an example of processing in the terminal device 20a according to the first embodiment. As illustrated in FIG. 7, the same reference signs are assigned to the portions common to these of FIG. 1, FIG. 3, FIG. 5, and FIG. 6, and detailed explanation thereof is omitted.

By focusing on one terminal device 20a among the terminal devices 20a, 20a, ···, 20b and performing a predetermined operation on this terminal device 20a, for example, the terminal device 20a requests the text conversion tool 21 from the server 10 (Step S100 of FIG. 8). The server 10 transmits the text conversion tool 21 to the terminal device 20a in response to the request. The terminal device 20a downloads and acquires the transmitted text conversion tool 21 (Step S101). As a result, the acquiring unit 223 is formed in the terminal device 20a.

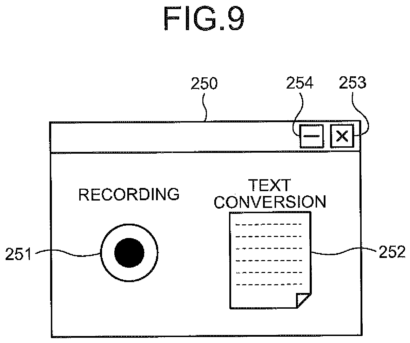

FIG. 9 represents an example of a text conversion tool screen that the acquiring unit 223 according to the first embodiment displays on the display 214 of the terminal device 20a. As illustrated in FIG. 9, a text conversion tool screen 250 includes a record button 251, a text conversion button 252, an end button 253, and a minimize button 254. The record button 251 is operated to instruct the acquiring unit 223 to start recording of sound data of the sound picked up by the microphone 216. The record button 251 instructs, when operated in the recording state, the acquiring unit 223 to stop the recording. The text conversion button 252 is operated to instruct the acquiring unit 223 to start the text conversion processing of the sound data recorded according to an operation of the record button 251. The end button 253 is operated to close the text conversion tool screen 250. At this time, if it is during recording, the recoding is stopped. The minimize button 254 is operated to minimize the text conversion tool screen 250. Even if the text conversion tool screen 250 is minimized, the operation during execution at the time of operating the minimize button 254 is not stopped.

When the record button 251 is operated, the acquiring unit 223 causes the sound acquiring unit 2230 to start recording (Step SI02), and causes the sound acquiring unit 2230 to acquire the sound data of the sound picked up by the microphone 216. The sound acquiring unit 2230 stores the acquired sound data in the storage 204 in association with information indicating the time when acquisition of the sound data is started. For example, when sound data is stored in the storage 204, a time stamp of a file that stores the sound data can be applied to the sound-data acquisition start time.

Then, at Step S103, the acquiring unit 223 causes the text acquiring unit 2231 to execute the text conversion processing on the sound data stored by recording (Step S103).

In the text conversion processing, the text acquiring unit 2231 causes the sound acquiring unit 2230 to acquire the stored sound data and transmits the acquired sound data to a text converter 224, and requests conversion of the sound data to a text to the text converter 224. The text converter 224 may be configured to be included in the acquiring unit 223 or in the text acquiring unit 2231, or may use, for example, a function of a text conversion server for providing text conversion service over the network 30.

The text converter 224 uses a known sound recognition technology to convert the sound data transmitted from the text acquiring unit 2231 into text information. For example, the text converter 224 recognizes the voice included in the sound data using a previously learned acoustic model, and specifies a set of series of recognized voices as a word. For example, a Hidden Markov Model can be used for specification of the word.

For example, in the case of Japanese, the specified word is written, as text, by, for example, Hiragana or Katakana according to the voice (Hiragana and Katakana are two types of Japanese characters except Kanji). The text converter 224 converts words written by Hiragana or Katakana into words written in kanji-kana combination using a known Kana-to-Kanji conversion technology.

The text converter 224 further associates time information with the specified word. For example, the text converter 224 measures a time from the head of sound data to the voice of the head of the word, and associates the time information indicating the time with the word. The text converter 224 transmits the specified word and the time information associated with the word to the text acquiring unit 2231.

The acquiring unit 223 causes the text acquiring unit 2231 to acquire the word transmitted from the text converter 224 together with the associated time information (Step S104). The acquiring unit 223 transmits the word and the corresponding time information acquired by the text acquiring unit 2231 to the server 10 (Step S105). The transmitted word and time information are collected by the collecting unit 124 and are stored in the storage unit 122 in the server 10.

The conversion of the word into kanji-kana combination may be executed in the text acquiring unit 2231 using, for example, a conversion program of Kanji-Kana combination installed in the terminal device 20a.

Then, at Step S106, the acquiring unit 223 determines whether the recording has been completed. When it is determined that the recording has not been completed, the acquiring unit 223 returns the process to Step S103. Therefore, a word obtained by converting the sound data to text and the time information corresponding to the word are transmitted to the server 10 each time the word is specified from the sound data.

Meanwhile, when it is determined that the recording has been completed at Step S106, the acquiring unit 223 ends a series of text conversion processing according to the flowchart of FIG. 8. A series of words acquired from one piece of sound data is collectively called a first text. In other words, the words are a part of the first text.

When the text conversion processing has been completed, the acquiring unit 223 transmits the sound data stored in the storage 204 to the server 10. The server 10 stores the transmitted sound data in the storage device 11.

The series of processes according to the flowchart of FIG. 8 are independently performed by the terminal devices 20a, 20a, ···, 20b, respectively.

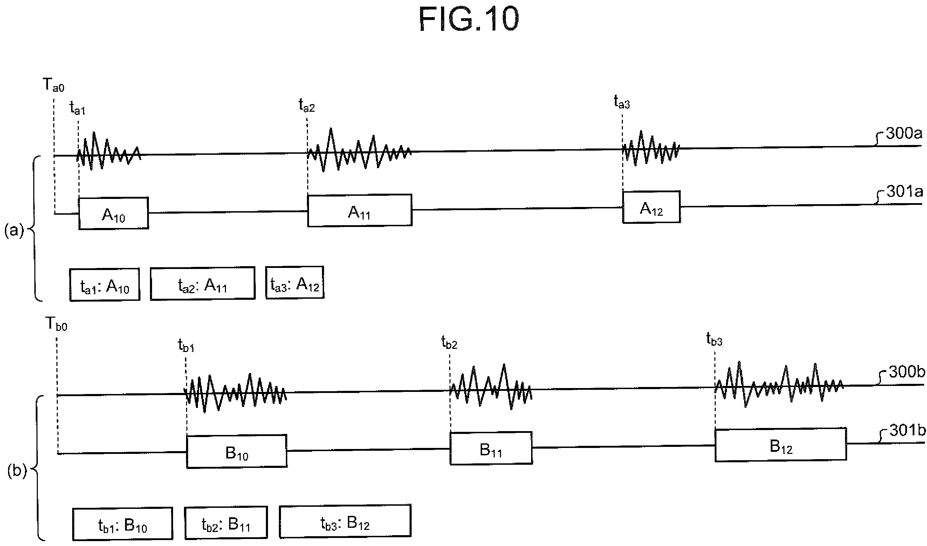

The text conversion processing of the sound data at Step S103 according to the first embodiment will be explained with reference to FIG 10. A section (a) of FIG. 10 and a section (b) of FIG. 10 represent text conversion processing based on sound data 300a and 300b recorded by, for example, one terminal device 20a among the terminal devices 20a, 20a, ··· and the terminal device 20b respectively. As illustrated in the sections (a) and (b) of FIG. 10, the sound data 300a and 300b are converted to text, and first texts 301a and 301b each including a plurality of words are acquired.

As illustrated in the section (a) of FIG. 10, it is assumed that the text converter 224 detects voices, about the sound data 300a of which recording is started at time Tₐ₀, from times tₐ₁, tₐ₂, and tₐ₃ starting from the time Tₐ₀ (hereinafter, recording start time Tₐ₀). The recording start time Tₐ₀ is an absolute time, and the times tₐ₁, tₐ₂, and tₐ₃ are relative time in the sound data 300a.

The text converter 224 converts the voice detected at the time tₐ₁ into a text to acquire a word A₁₀. Likewise, the text converter 224 converts the voices detected at the times tₐ₂ and tₐ₃ into texts to acquire words A₁₁ and A₁₂ respectively. The text converter 224 associates the times tₐ₁, tₐ₂, and tₐ₃ with the words A₁₀, A₁₁, and A₁₂ respectively, as illustrated in the lower part of the section (a) of FIG. 10.

For example, when the word A₁₀ is acquired, the text converter 224 associates the time tₐ₁ with the acquired word A₁₀. The text converter 224 then transmits the word A₁₀ and the time tₐ₁ to the text acquiring unit 2231. The text converter 224 performs the processing of transmitting the word and the time to the text acquiring unit 2231 each time, for example, when the word is acquired.

The same goes for the processing performed on the sound data 300b in the section (b) of FIG. 10. Recording of the sound data 300b starts at time T_{b0}. Generally, the recording start time T_{b0} of the sound data 300b is a different time from the recording start time Tₐ₀ of the sound data 300a.

Similarly to the case of the sound data 300a, the text converter 224 converts the voices detected at times t_{b1}, t_{b2}, and t_{b3} of the sound data 300b into texts to acquire words B₁₀, B₁₁, and B₁₂ respectively. The text converter 224 associates the times t_{b1}, t_{b2}, and t_{b3} with the words B₁₀, B₁₁, and B₁₂ respectively each time when the words B₁₀, B₁₁, and B₁₂ are acquired, as illustrated in the lower part of the section (b) of FIG. 10, and transmits the words to the text acquiring unit 2231.

Absolute times Tₐ₁, Tₐ₂, and Tₐ₃ of the words A₁₀, A₁₁, and A₁₂ can be respectively calculated by adding each of the times tₐ₁, tₐ₂, and tₐ₃ to the time Ta0. Similarly to the case of the words B₁₀, B₁₁, and B₁₂, it is possible to calculate absolute times by adding each of the times t_{b1}, t_{b2}, and t_{b3} to the time T_{b0}.

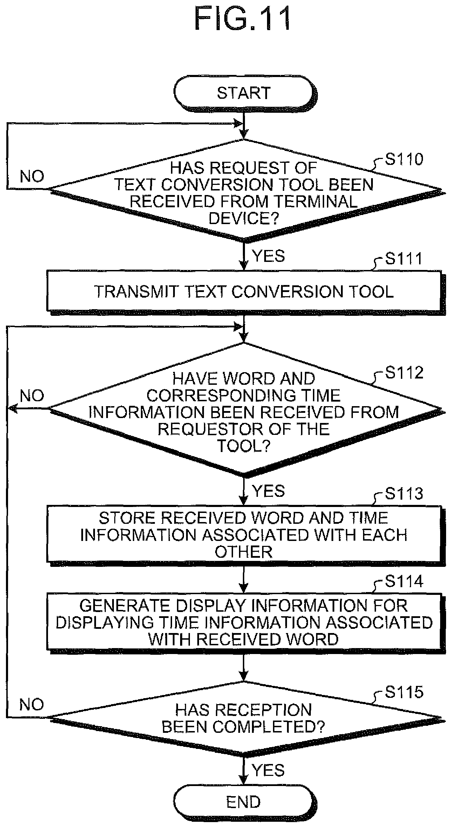

FIG. 11 is a flowchart illustrating an example of processing in the server 10 according to the first embodiment. At Step S110, the server 10 causes the control unit 121 to determine whether a request of the text conversion tool 21 has been received from any one of the terminal devices 20a, 20a, ···, 20b (e.g., one terminal device 20a among the terminal devices 20a, 20a, ···). When it is determined that the request has not been received, the control unit 121 returns the process to Step S110, and moves the process to Step S111 when it is determined that the request has been received.

At Step S111, the control unit 121 transmits the text conversion tool 21 to a requestor of the text conversion tool 21. Then at Step S112, the control unit 121 determines whether the word and the time information corresponding to the word have been received from the requestor of the text conversion tool 21. When it is determined that both have not been received, the control unit 121 returns the process to Step S112, and moves the process to Step S113 when it is determined that both have been received.

At Step S113, the control unit 121 causes the storage unit 122 to associate the word with the time information which are received from the requestor of the text conversion tool 21 and store them in the storage device 11. Then, at Step S114, the control unit 121 causes the display information generating unit 126 to generate display information for displaying the word received from the requestor of the text conversion tool 21 associated with the time information. The generated display information is transmitted to, for example, the IWB 13, and the word and the time information are associated with each other and displayed in the IWB 13 as explained later.

At Step S115, the control unit 121 determines whether the reception of all words based on one piece of sound data from the requestor of the text conversion tool 21 has been completed. For example, when a predetermined time has elapsed since the last reception of the words from the requestor of the text conversion tool 21 and the next word has not been received, the control unit 121 determines that the reception of all the words based on the one piece of sound data has been completed. It may be configured that the requestor of the text conversion tool 21 transmits information indicating that transmission of the words based on one sound data has completed.

When it is determined that the reception of all the words based on one sound data has not been completed, the control unit 121 returns the process to Step S112. Meanwhile, when it is determined that the reception of all the words based on one sound data has been completed, the control unit 121 ends the series of processes, related to the requestor of the text conversion tool 21, according to the flowchart of FIG. 11.

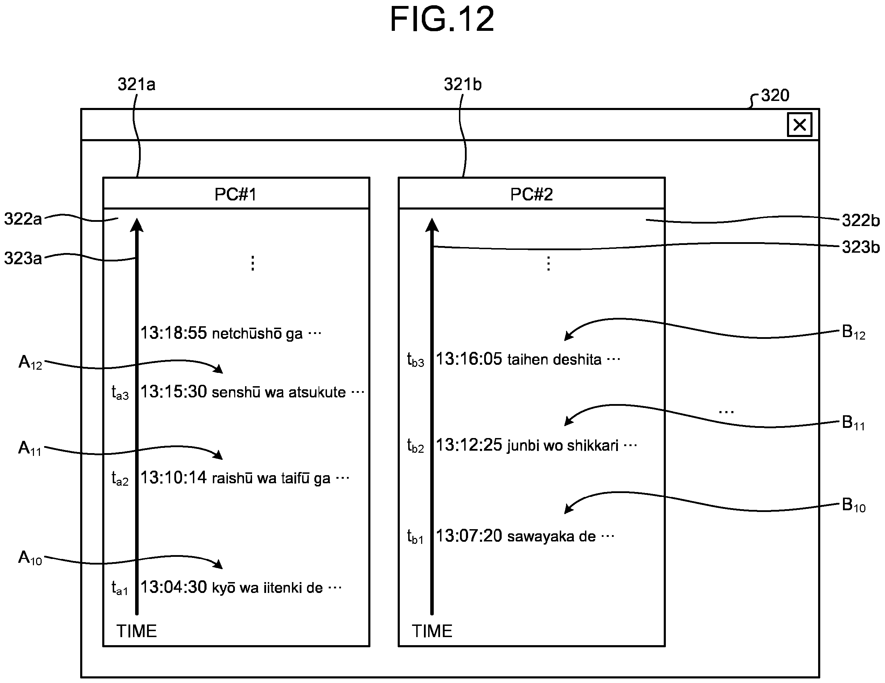

FIG. 12 represents an example of a time series display screen 320 based on the display information generated by the display information generating unit 126 at Step S113 according to the first embodiment. The time series display screen 320 exemplified in FIG. 12 is displayed on, for example, the IWB 13 by the server 10. However, the time series display screen 320 may be displayed on the displays 214 of the terminal devices 20a, 20a, ···, 20b, or may be displayed on a display of another terminal device to which access is allowed by the server 10.

The time series display screen 320 includes time series display units 321a, 321b, ··· corresponding to respective terminal devices each of which transmits the word and the time information to the server 10. In the example of FIG. 12, the time series display unit 321a corresponds to the terminal device 20a explained in the section (a) of FIG. 10 and displays information based on the sound data 300a. The time series display unit 321b corresponds to the terminal device 20b explained in the section (b) of FIG. 10 and displays information corresponding to the sound data 300b.

In the example of FIG. 12, the time series display unit 321a displays an indication 323a indicating a time axis by an arrow and the words (Japanese) A₁₀, A₁₁, A₁₂, ··· acquired from the sound data 300a in an area 322a. The words A₁₀, A₁₁, A₁₂, ··· are displayed in the order and at the intervals according to the time axis, and pieces of time information indicating the times tₐ₁, tₐ₂, tₐ₃, ··· respectively corresponding to the words are further displayed therein. Here, the times tₐ₁, tₐ₂, tₐ₃, ··· are displayed as absolute times each obtained by adding the recording start time Tₐ₀ of the sound data 300a thereto.

Similarly to the time series display unit 321a, the time series display unit 321b also displays an indication 323b indicating a time axis by an arrow, the words (Japanese) B₁₀, B₁₁, B₁₂, ••• acquired from the sound data 300b, and pieces of time information indicating the times t_{b1}, t_{b2}, t_{b3}, ··· respectively corresponding to the words in an area 322b, in the order and at the intervals according to the time axis.

In the time series display unit 321b, similarly to the time series display unit 321a, the times t_{b1}, t_{b2}, t_{b3}, ··· are displayed as absolute times obtained by adding the recording start time T_{b0} of the sound data 300b thereto. Thus, the time axes of the time series display unit 321a and the time series display unit 321b match each other. Therefore, the words acquired from the sounds picked up by the terminal devices 20a, 20a, ···, 20b are displayed along the common time series, which makes it easier to grasp the proceedings.

The terminal device 20b is connected to the terminal devices 20a, 20a, ··· by the remote conference system, and therefore a delay may occur in transmission of each information. In this case, it is conceivable that a delay time is previously acquired and the acquired delay time is subtracted from each of the times t_{b1}, t_{b2}, t_{b3}, ···.

### Second Embodiment

A second embodiment will be explained next. In generating meeting minutes, there is a case where sounds recorded during the meeting are reproduced after the finish of the meeting, a text is input based on the reproduced sounds to generate a finished text, and the finished text is used to generate the meeting minutes. In this case, there is no relationship between the time when the reproduced sounds are recorded and each part of the finished text, and therefore the progress of the meeting may not easily be grasped even if the meeting minutes generated by using the finished text is referred to.

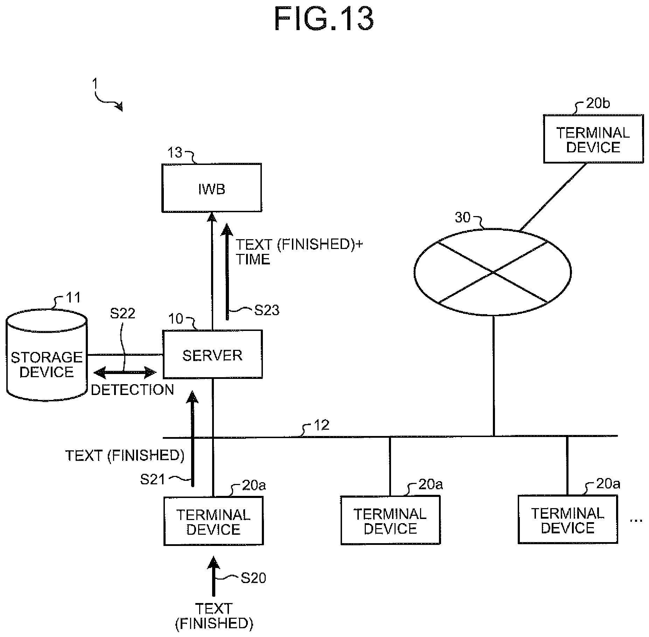

In the second embodiment, the time information is associated with the finished text. FIG. 13 schematically represents a flow of processing of the information processing system 1 according to the second embodiment. In the second embodiment, the configuration of the information processing system 1 illustrated in FIG. 1 can be used without any change. As illustrated in FIG. 13, the same reference signs are assigned to portions common to these of FIG. 1, and detailed explanation thereof is omitted.

As illustrated in FIG. 13, it is assumed that the storage device 11 previously stores the words A₁₀, A₁₁, A₁₂, ··· and the words B₁₀, B₁₁, B₁₂, ···, which are prepared in the method based on the recorded sounds by the terminal devices 20a, 20a, ··· as explained in the first embodiment, associated with the times tₐ₁, tₐ₂, tₐ₃, ··· and the times t_{b1}, t_{b2}, t_{b3}, ··· which are time information respectively corresponding to the words.

A user uses an information processing device, which is connectable to the network 12 and is accessible to the server 10, to prepare a finished text based on the sounds recorded during the meeting (Step S20). For example, the user can use one of the terminal devices 20a, 20a, ···, 20b to prepare the finished text. As the sound data used to prepare the finished text, the sound data, which is recorded by a terminal device 20a that prepares the finished text and is stored in the terminal device 20a, can be used. However, the finished text may be prepared by using one or more sound data recoded in the terminal devices 20a, 20a, ···, 20b and stored in the storage device 11.

The user prepares a finished text and transmits the prepared finished text from the terminal device 20a to the server 10 (Step S21). The server 10 compares the transmitted finished text with each of the words acquired from the terminal devices 20a, 20a, ···, 20b stored in the storage device 11, and detects a part of the finished text corresponding to each word (Step S22). The server 10 then associates the time information associated with the corresponding word with the part of the detected finished text.

The server 10 generates display information for displaying the part of the finished text associated with the time information, and supplies the generated display information to, for example, the IWB 13 (Step S23). Thus, it is possible to display the finished text along the time series for each part.

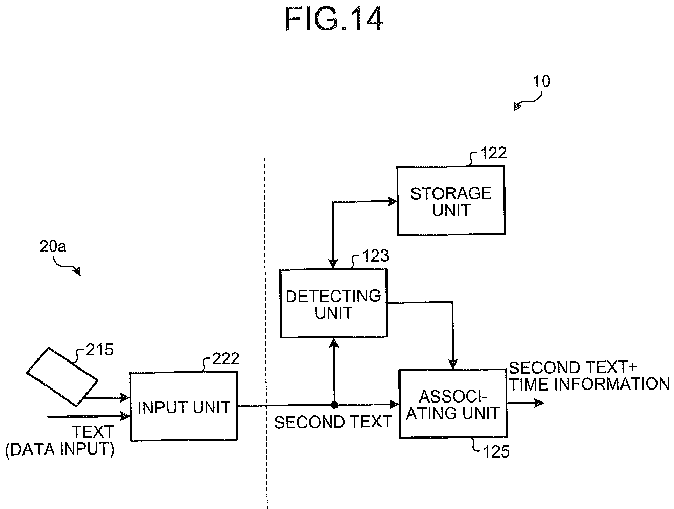

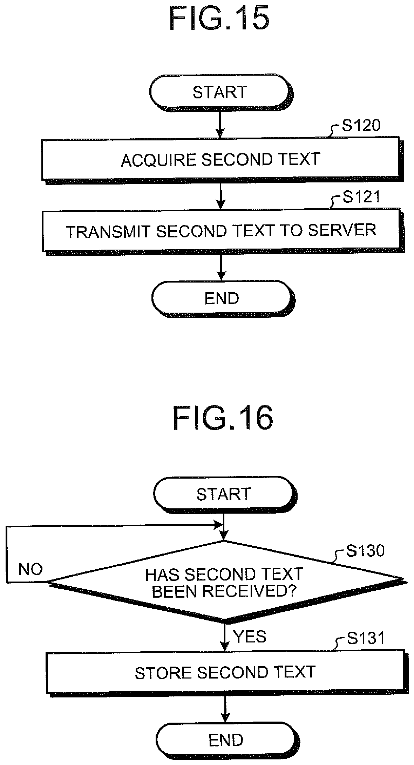

FIG. 14 is a diagram for explaining a flow of processing of the information processing system 1 according to the second embodiment. The processing of the information processing system 1 according to the second embodiment will be explained below with reference to FIG. 14 and flowcharts of FIG. 15 to FIG. 17. As illustrated in FIG. 14, the same reference signs are assigned to the portions common to these of FIG. 1, FIG. 3, FIG. 5, and FIG. 6, and detailed explanation thereof is omitted.

In the second embodiment, for the function of the server 10, the function of the collecting unit 124 in FIG. 5 can be omitted.

FIG. 15 is a flowchart illustrating an example of processing of the terminal device 20a according to the second embodiment. At Step S120, the terminal device 20a acquires a second text being the finished text. For example, in the terminal device 20a, the finished text is input to the input unit 222, and the second text is acquired. Generally, the second text is converted, at the time of its input, to a text written in kanji-kana combination using a Kana-to-Kanji conversion program installed in the terminal device 20a. Then, at Step S121, the terminal device 20a causes the communication unit 220 to transmit the second text acquired at Step S120 to the server 10 via the network 12.

The input of the finished text to the input unit 222 at Step S120 can be manually performed using the keyboard 215 connected to the terminal device 20a. However, the finished text prepared by other information processing device may be input to the input unit 222 as data via an interface such as a Universal Serial Bus (USB) or via the network 12.

FIG. 16 is a flowchart illustrating an example of processing of the server 10 corresponding to transmission of the second text of FIG. 15 according to the second embodiment. At Step S130, the server 10 determines whether the second text has been received via the network 12. When it is determined that the second text has not been received, the server 10 returns the process to Step S130, and moves the process to Step S131 when it is determined that the second text has been received. At Step S131, the server 10 stores the second text received at Step S130 in the RAM 102 or in the storage 103.

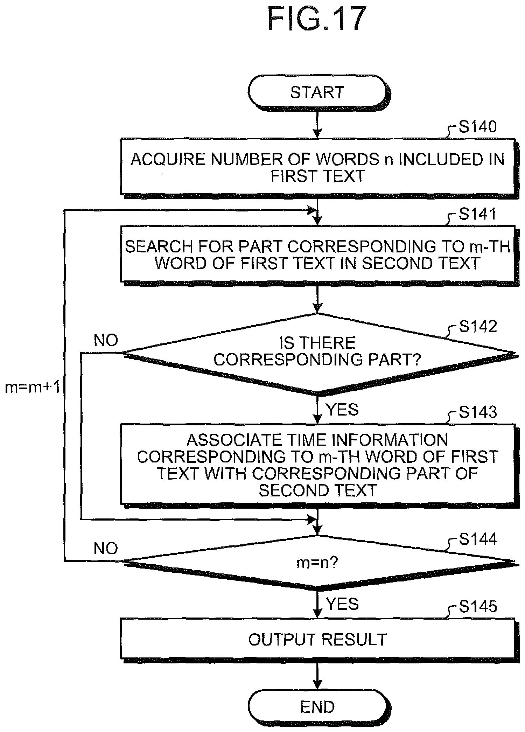

FIG. 17 is a flowchart illustrating an example of association processing of words included in a first text with respect to the second text according to the second embodiment. The association processing will be explained below with reference to the flowchart of FIG. 17 and to FIG. 14.

The processing according to the flowchart of FIG. 17 is started after the end of the processing according to the flowchart of FIG. 16. Prior to the processing of the flowchart of FIG. 17, the server 10 causes the storage unit 122 to acquire the first text being a processing target from the storage device 11. The first text includes, as explained above, one or more words. The server 10 initializes a variable m to 1.

At Step S140, in the server 10, the detecting unit 123 acquires the number of words n which is the number of words included in the first text. Then, at Step S141, the detecting unit 123 searches for a part corresponding to a m-th word of the first text in the second text stored at Step S131 in the flowchart of FIG. 16.

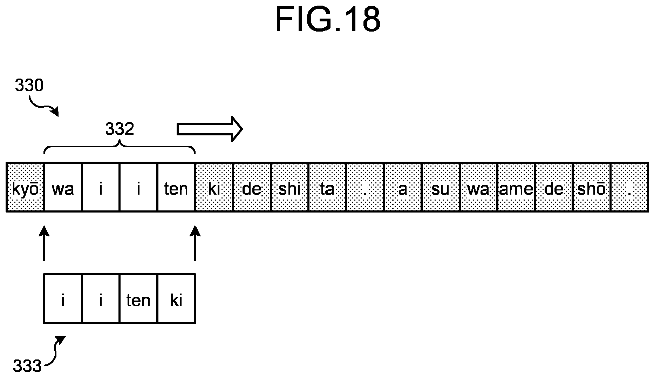

Search processing at Step S141 according to the second embodiment will be explained below with reference to FIG. 18. A part corresponding to an m-th word 333 (in this example, Japanese word " 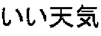 ") included in the first text is searched in a second text 330 (in this example, Japanese text " 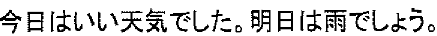 ") in FIG. 18. In this case, for example, a window 332 with a length equal to the number of characters (four Japanese characters) included in the word 333 is set in the second text 330. Then, the window 332 is moved within the second text 330, and it is determined whether the word 333 corresponds to a character string in the window 332. At this time, for example, when it is determined whether there is a match between character units, and if a matching ratio is not less than a predetermined value, it is possible to determine that the word 333 corresponds to the character string in the window 332.

At Step S142, the detecting unit 123 determines whether there is a part corresponding to the m-th word of the first text in the second text. When it is determined that there is no corresponding part, the detecting unit 123 moves the process to Step S144, and moves the process to Step S143 when it is determined that there is a corresponding part.

At Step S143, in the server 10, the associating unit 125 associates the time information corresponding to the m-th word with a part, in the second text, corresponding to the m-th word of the first text. For example, when it is found that the m-th word is the word A₁₁ by referring to the section (a) of FIG. 10, the associating unit 125 associates the time tₐ₂ as corresponding time information with the word A₁₁. At this time, it is preferred that the associated time information is set to an absolute time obtained by adding the recording start time Tₐ₀ to the time tₐ₂.

Then, at Step S144, the detecting unit 123 determines whether the variable m is equal to the number of words n. When it is determined that the variable m is not equal to the number of words n, the detecting unit 123 adds 1 to the variable m and returns the process to Step S141. Meanwhile, when it is determined that the variable m is equal to the number of words n, the detecting unit 123 determines that the processing for the first text as a processing target is complete, and moves the process to Step S145.

At Step S145, the associating unit 125 outputs the second text and the time information associated with each part of the second text as result data. The output second text and time information are stored in the storage device 11 by, for example, the storage unit 122.

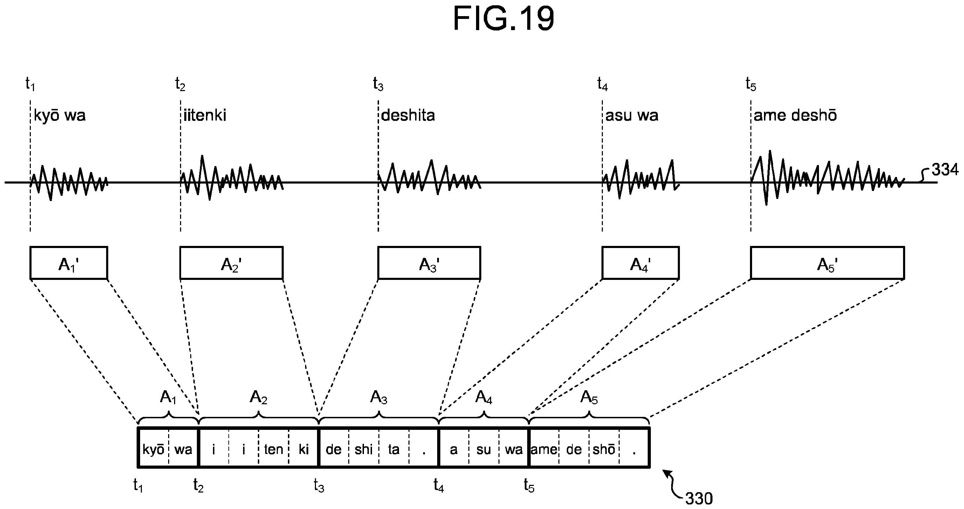

The processing in the flowchart of FIG. 17 according to the second embodiment will be more specifically explained with reference to FIG. 19. The first text acquired from sound data 334 includes five words (Japanese) A₁', A₂', A₃', A₄', and A₅' (n=5). Start times of the words A₁', A₂', A₃', A₄', and A₅' within the sound data 334 are times t₁, t₂, t₃, t₄, and t₅, respectively.

Because the first word A₁' consists of three characters, the detecting unit 123 sets the window 332 with a length of three characters in the second text 330, moves the window 332 within the second text 330, and determines whether there is a part of the second text corresponding to the word A₁'. In the example of FIG. 19, it is detected that a part A₁ with first three characters in the second text 330 is a part corresponding to the word A₁'. The associating unit 125 associates the time t₁, which is the start time of the word A₁', with the first portion of the part A₁.

Hereinafter, similarly, the detecting unit 123 sequentially searches for a corresponding part in the second text 330 for each of the second to n-th words A₂', A₃', A₄', and A₅'. As a result, the detecting unit 123 detects parts A₂, A₃, A₄, and A₅ of the second text 330 respectively corresponding to the words A₂', A₃', A₄', and A₅'. The associating unit 125 associates the start times t₂, t₃, t₄, and t₅ of the words A₂', A₃', A₄'_{,} and A₅' with the detected parts A₂, A₃, A₄, and A₅, respectively.

Thus, the second text is output by being configured so that the start times t₁ to t₅ of the respective words A₁' to A₅' are associated with the parts A₁ to A₅ respectively corresponding to the words A₁' to A₅'.

In the above explanation, the first text and the second text are compared with each other as text information, however, the embodiment is not limited to this example. For example, the first text and the second text are converted into first voice data and second voice data respectively using a known speech synthesis technology, and by comparing the first voice data with the second voice data, a corresponding part of each word included in the first text may be detected in the second text.

### Modification of Second Embodiment

A modification of the second embodiment will be explained next. The modification of the second embodiment is an example of associating each word included in each of the first texts acquired from a plurality of sound data with a part of the second text. A plurality of sound data are assumed to be sound data recorded under different conditions in, for example, the same meeting. In this case, voices included in the sound data may be different from each other depending on positions of microphones used for recording, positions of speakers, and the like. As an example, a case can be considered, in which a voice included in certain sound data is not included in other sound data or is included therein, however, in a level which is difficult to be detected.

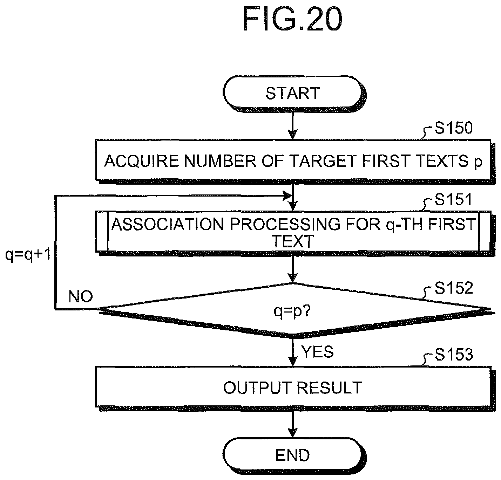

FIG. 20 is a flowchart illustrating an example of association processing of words included in a plurality of first texts with respect to the second text in the server 10 according to the modification of the second embodiment. The association processing will be explained below with reference to the flowchart of FIG. 20 and to FIG. 14. In the modification of the second embodiment, because the configuration of the information processing system 1 can be used without any change, explanation of the system configuration is omitted.

The processing according to the flowchart of FIG. 20 is started after the end of the processing according to the flowchart of FIG. 16. Prior to the processing of the flowchart of FIG. 20, the server 10 causes the storage unit 122 to acquire a plurality of first texts being a processing target from the storage device 11. Each of the acquired first texts includes one or more words as explained above. The server 10 initializes a variable q to 1.

At Step S150, in the server 10, the detecting unit 123 acquires the number of first texts p as a target. Then, at Step S151, for the q-th first text, the detecting unit 123 and the associating unit 125 associate time information with each part of the second text according to the processing using the flowchart of FIG. 17. At Step S152, the detecting unit 123 determines whether the variable q is equal to the number of first texts p. When it is determined that the variable q is not equal to the number of first texts p, the detecting unit 123 adds 1 to the variable q and returns the process to Step S151, and performs the association processing for the next first text.

Meanwhile, when it is determined that the variable q is equal to the number of first texts p, the detecting unit 123 determines that the processing for all the first texts as processing targets is complete, and moves the process to Step S153. At Step S153, the associating unit 125 outputs the second text and the time information associated with each part of the second text as result data. The output second text and time information are stored in the storage device 11 by, for example, the storage unit 122.

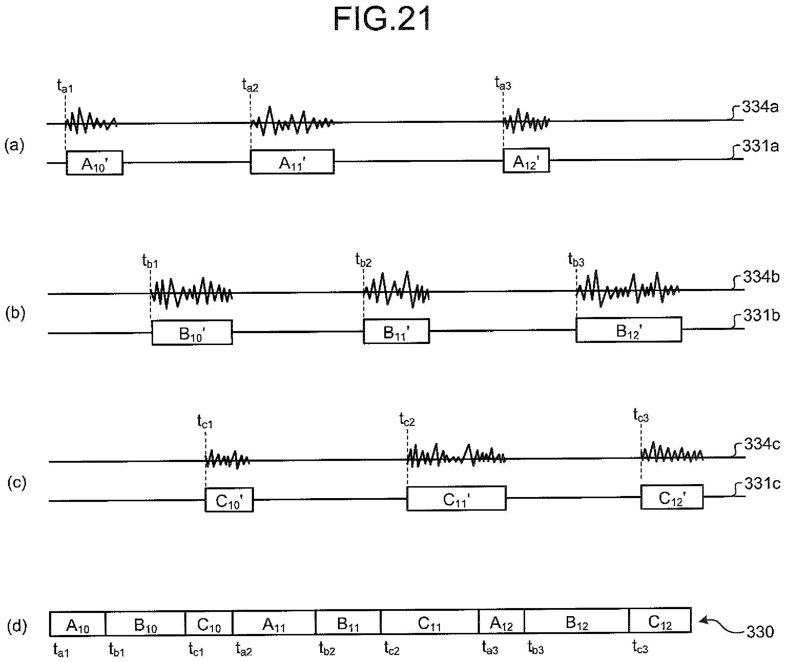

The processing in the flowchart of FIG. 20 will be more specifically explained with reference to FIG. 21.

A section (a) of FIG. 21 represents an example of sound data 334a recorded by, for example, a first terminal device 20a (PC#1) and of a first text 331a (first text of q=1) acquired from the sound data 334a. In the example of the section (a) of FIG. 21, the first text 331a includes words A₁₀', A₁₁', and A₁₂' with start times at the times tₐ₁, tₐ₂, tₐ₃ respectively in the sound data 334a. The recording start time of the sound data 334a is set to Tₐ₀₀.

Likewise, a section (b) of FIG. 21 represents an example of sound data 334b recorded by, for example, a second terminal device 20a (PC#2) and of a first text 331b (first text of q=2) acquired from the sound data 334b. In the example of the section (b) of FIG. 21, the first text 331b includes words B₁₀', B₁₁', and B₁₂' with start times at the times t_{b1}, t_{b2}, and t_{b3} respectively in the sound data 334b. The recording start time of the sound data 334b is set to T_{b00}.

Moreover, a section (c) of FIG. 21 represents an example of sound data 334c recorded by, for example, a third terminal device 20a (PC#3) and of a first text 331c (first text of q=3) acquired from the sound data 334c. In the example of the section (c) of FIG. 21, the first text 331c includes words C₁₀', C₁₁', and C₁₂' with start times at times t_{c1}, t_{c2}, and t_{c3} respectively in the sound data 334c. The recording start time of the sound data 334c is set to T_{c00}.

A section (d) of FIG. 21 represents an example of the second text 330. In this example, the second text 330 includes parts A₁₀ to A₁₂, B₁₀ to B₁₂, and C₁₀ to C₁₂ respectively corresponding to the words A₁₀' to A₁₂', B₁₀' to B₁₂', and C₁₀' to C₁₂' illustrated in the section (a) of FIG. 21 to the section (c) of FIG. 21 respectively. In the second text 330, the parts are arranged in order of the parts A₁₀, B₁₀, C₁₀, A₁₁, B₁₁, C₁₁, A₁₂, B₁₂, and C₁₂ according to, for example, the order of remarks during the meeting.

In the flowchart of FIG. 20, the number of first texts p=3 as targets is acquired at Step S150. In the first (q=1) processing at Step S151, the detecting unit 123 detects the parts A₁₀, A₁₁, and A₁₂ of the second text 330 respectively corresponding to the words A₁₀', A₁₁', and A₁₂' included in the first text 331a. The associating unit 125 associates the times tₐ₁, tₐ₂, and tₐ₃ respectively corresponding to the words A₁₀', A₁₁', and A₁₂' with the parts A₁₀, A₁₁, and A₁₂ of the detected second text 330 respectively.

Similarly, in second (q=2) processing in the flowchart of FIG. 20, the detecting unit 123 detects the parts B₁₀, B₁₁, and B₁₂ of the second text 330 respectively corresponding to the words B₁₀', B₁₁', and B₁₂' included in the first text 331b, and the associating unit 125 associates the times t_{b1}, t_{b2}, and t_{b3} respectively corresponding to the words B₁₀', B₁₁', and B₁₂' with the parts B₁₀, B₁₁, and B₁₂, respectively.

Likewise, in third (q=3) processing in the flowchart of FIG. 20, the times t_{c1}, t_{c2}, and t_{c3} are associated with the parts C₁₀, C₁₁, and C₁₂ of the second text 330, respectively.

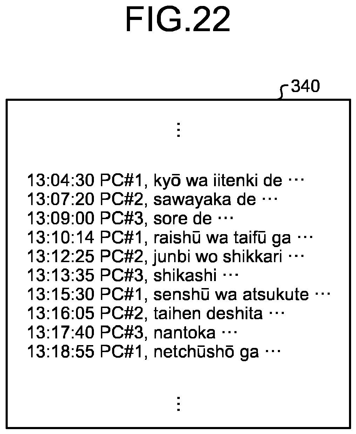

FIG. 22 represents an example of result data output at Step S153 in the flowchart of FIG. 20 according to the modification of the second embodiment. In the example of FIG. 22, result data 340 includes the parts A₁₀, B₁₀, C₁₀, A₁₁, B₁₁, C₁₁, A₁₂, B₁₂, and C₁₂ of the second text 330 and the times tₐ₁, tₐ₂, tₐ₃, t_{b1}, t_{b2}, t_{b3}, t_{c1}, t_{c2}, and t_{c3} respectively associated therewith in a corresponding manner in respective rows.

It is assumed that the times tₐ₁, tₐ₂, tₐ₃, t_{b1}, t_{b2}, t_{b3}, t_{c1}, t_{c2}, and t_{c3} are absolute times obtained by adding the corresponding recording start times Tₐ₀₀, T_{b00}, and T_{c00} to the times within the sound data 334a, 334b, and 334c, respectively.

The example of FIG. 22 further includes information indicating the terminal devices 20a (PC#1, PC#2, and PC#3) that record the sound data 334a, 334b, and 334c in which the words A₁₀', B₁₀', C₁₀,' A₁₁', B₁₁', C₁₁', A₁₂', B₁₂', and C₁₂' respectively corresponding to the parts A₁₀, B₁₀, C₁₀, A₁₁, B₁₁, C₁₁, A₁₂, B₁₂, and C₁₂ of the second text 330 are detected.

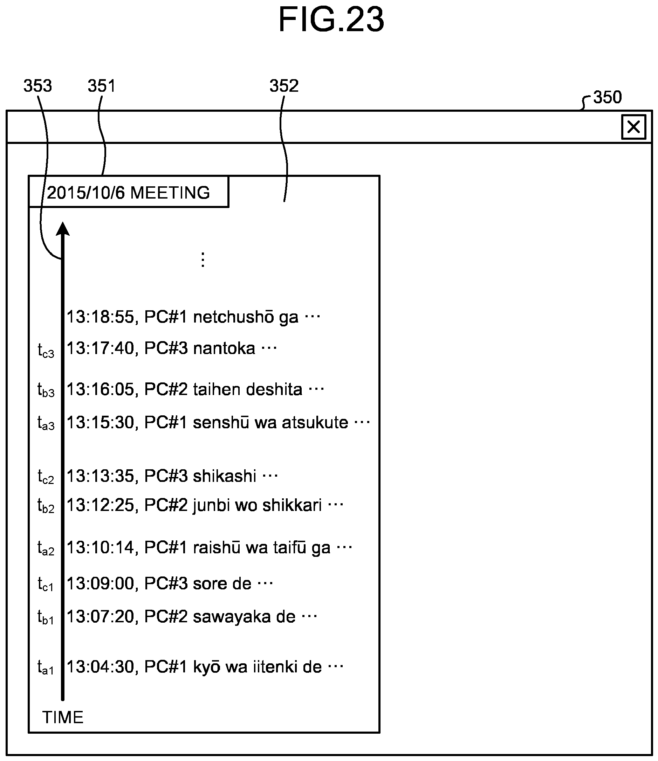

FIG. 23 represents an example of a time series display screen 350 based on the display information generated by the display information generating unit 126 based on the result data 340 according to the modification of the second embodiment. The time series display screen 350 exemplified in FIG. 23 is displayed on, for example, the IWB 13 by the server 10. However, the time series display screen 350 may be displayed on the display 214 of each of the terminal devices 20a, 20a, ···, 20b, or may be displayed on the display of another further terminal device to which access is allowed by the server 10.

The time series display screen 350 includes a time series display part 351, and displays an indication 353 indicating a time axis by an arrow and the texts (Japanese) of the parts A₁₀, B₁₀, C₁₀, A₁₁, B₁₁, C₁₁, A₁₂, B₁₂, and C₁₂ included in the second text 330 in an area 352 of the time series display part 351. The texts of the parts A₁₀, B₁₀, C₁₀, A₁₁, B₁₁, C₁₁, A₁₂, B₁₂, and C₁₂ are displayed on the time axis according to the order and intervals of the times tₐ₁, t_{b1}, t_{c1}, tₐ₂, t_{b2}, t_{c2}, tₐ₃, t_{b3}, and t_{c3} which are absolute times respectively associated with the texts.

Thus, in the modification of the second embodiment, the time information corresponding to each time at which any remark is made in, for example, an actual meeting is associated with each part of the second text which is the text finished by the user, based on a plurality of pieces of sound data. Therefore, even if each of the sound data recorded by a plurality of terminal devices in different conditions does not partially include a voice made by the remark, it is possible to grasp the flow of remarks in the whole meeting.

### Third Embodiment

A third embodiment will be explained next. The third embodiment is an example in which the information processing system 1 according to the first embodiment is applied to a deliverables generating system. The deliverables generating system is configured to collect, for example, shared data updated by one or more terminal devices from a plurality of groups each including the one or more terminal devices, synthesize a plurality of collected shared data at a specified timing, and generate deliverable data as deliverables at that time.

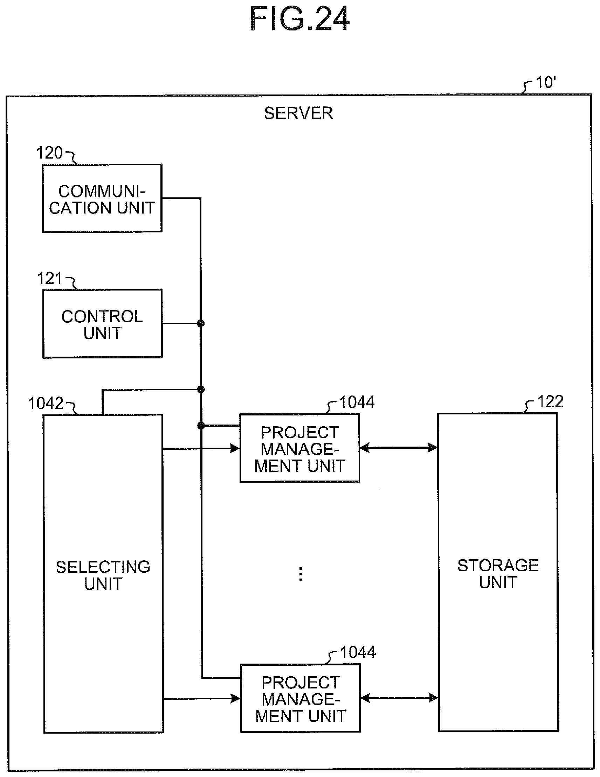

FIG. 24 is a functional block diagram for explaining a function of a server 10' according to the third embodiment. As illustrated in FIG. 24, the same reference signs are assigned to the portions common to these of FIG. 5, and detailed explanation thereof is omitted. Because the configuration as explained in FIG. 2 can be applied to the hardware configuration of the server 10' without any change, explanation thereof is omitted herein.

As illustrated in FIG. 24, the server 10' includes the communication unit 120, the control unit 121, the storage unit 122, a selecting unit 1042, and one or more project management units 1044. The communication unit 120, the control unit 121, the storage unit 122, the selecting unit 1042, and the one or more project management units 1044 are implemented by a program operating on the CPU 100. However, part of or all of the communication unit 120, the control unit 121, the storage unit 122, the selecting unit 1042, and the one or more project management units 1044 may be constituted by a hardware circuit operating in corporation with each other.

The server 10' receives an access from the terminal devices 20a that execute a WEB browser or the like. The server 10' provides information requested by each of the terminal devices 20a to the corresponding terminal device 20a.

The server 10' manages at least one shared data that can be updated by the terminal devices 20a. More specifically, the server 10' manages at least one shared data so that the respective terminal devices 20a can refer to existing shared data, register new shared data, update the existing shared data and delete the existing shared data, or the like.

The server 10' acquires a terminal image being an image displayed on each of the terminal devices 20a and stores a log of the terminal image. Moreover, the server 10' stores a log of the shared data managed thereby. The server 10' generates deliverable data including at least one shared data managed thereby.

The shared data may be any data such as text data, image data, moving image data, music data, document data, or program data (script data). The deliverable data is data obtained by synthesizing, for example, at least one shared data to be documented. For example, the deliverable data is document data such as Portable Document Format (PDF) data in which the shared data being text data or image data is arranged at predetermined positions. In addition, the deliverable data may be Web document data in which text data, image data, moving image data, music data, document data, program data, and the like are synthesized.

The server 10' forms a group with a plurality of users for each project. The server 10' implements communication between users for each project. Moreover, the server 10' includes the project management unit 1044 for each project.

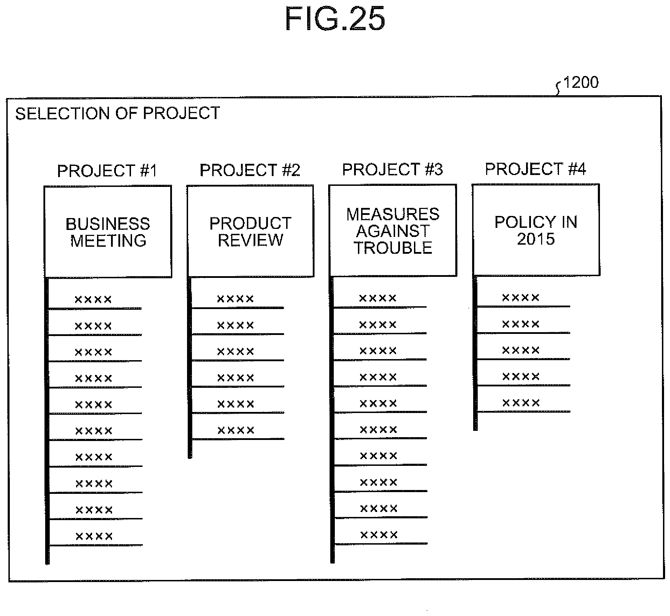

As illustrated in FIG. 24, when an access is made from a terminal device 20a whose user authentication is allowed, the selecting unit 1042 provides a project selection screen 1200 as illustrated in FIG. 25 to the terminal device 20a to display the project selection screen on the display 214 of the terminal device 20a. The project selection screen 1200 is a screen for causing the terminal device 20a to select one project that participates from at least one managed project. When any one of the projects is selected by the user, the terminal device 20a transmits the selection information indicating the selected project to the server 10'.

The selecting unit 1042 selects a project in which the terminal device 20a participates according to the selection information sent from the terminal device 20a. The selecting unit 1042 calls a project management unit 1044 corresponding to the project selected according to the selection information sent from the terminal device 20a to allow information exchange between the project management unit 1044 and the terminal device 20a.

Each of the project management units 1044 receives an access from each of the terminal devices 20a each participating in a corresponding project. Each of the project management units 1044 performs various information processing related to the corresponding project.

The storage unit 122 stores the data managed by each of the project management units 1044 in the storage device 11 for each project. However, the storage unit 122 may store the data managed by each of the project management units 1044 in the storage 103 or may store the data in the storage device 11 and in the storage 103.

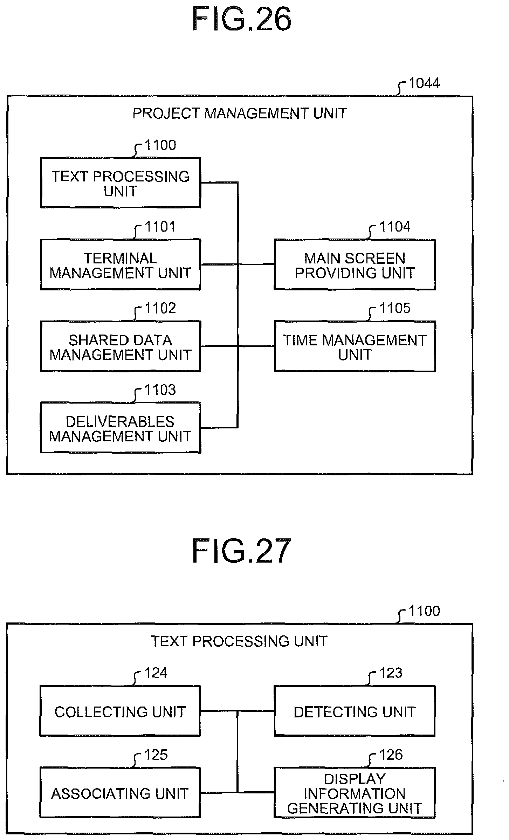

FIG. 26 is a functional block diagram for explaining the function of the project management unit 1044 according to the third embodiment. The project management unit 1044 includes a text processing unit 1100, a terminal management unit 1101, a shared data management unit 1102, a deliverables management unit 1103, a main screen providing unit 1104, and a time management unit 1105.

FIG. 27 is a functional block diagram of an example for explaining a function of the text processing unit 1100 according to the third embodiment. The text processing unit 1100 includes the detecting unit 123, the collecting unit 124, the associating unit 125, and the display information generating unit 126, and implements part of the functions of the server 10 explained in FIG. 5. In other words, the server 10' according to the third embodiment includes some functions of the server 10 according to the first embodiment.

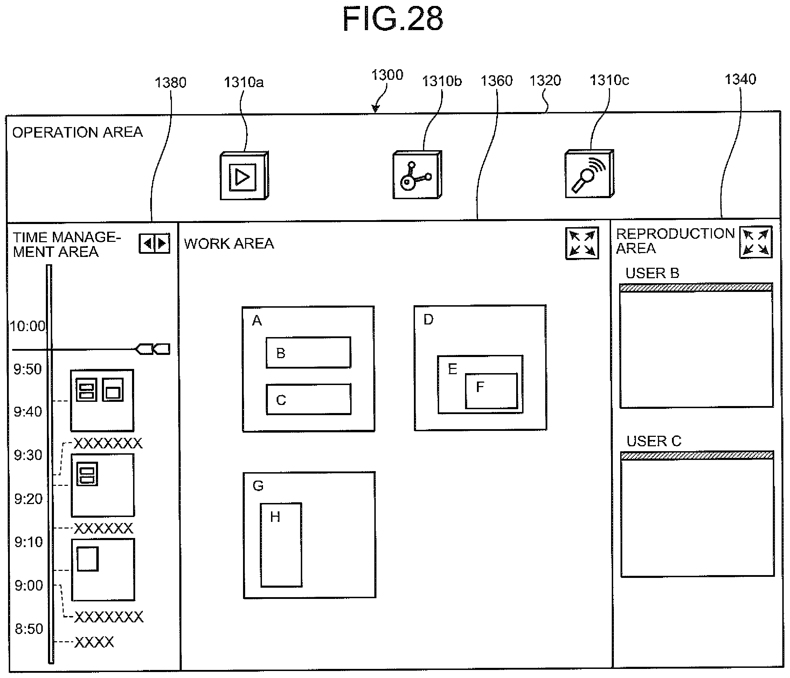

Returning to the description of FIG. 26, the main screen providing unit 1104 displays a main screen 1300, on the screen of each of the terminal devices 20a, including, for example, an operation area 1320, a reproduction area 1340, a work area 1360, and a time management area 1380 as illustrated in FIG. 28.

In the main screen 1300, the operation area 1320 displays various operation buttons 1310a, 1310b, and 1310c. The operation button 1310a is a button for controlling display of, for example, the reproduction area 1340, the operation button 1310b is a button for instructing preparation of deliverable data, and the operation button 1310c is a button for displaying a screen for instructing start of voice collection and text conversion.

In the main screen 1300, the reproduction area 1340 displays terminal images being images displayed on terminal devices 20a each participating in the project. The work area 1360 displays shared data accessible from the terminal devices 20a each participating in the project. The time management area 1380 displays information for time elapse, images to be displayed, and times of texts, and information for managing the progress of the project.

Returning to the description of FIG. 26, the terminal management unit 1101 includes a terminal image acquiring function, a terminal log generating function, and a terminal image display control function. The terminal management unit 1101 causes the terminal image acquiring function to acquire a terminal image being an image displayed on each of the terminal devices 20a. The terminal management unit 1101 uses the terminal log generating function to generate a log of the terminal image for each terminal device 20a based on the terminal image acquired by the terminal image acquiring function, and causes the storage unit 122 to store the generated log of the terminal image associated with the time information in, for example, the storage device 11.

The terminal management unit 1101 uses the terminal image display control function to display the terminal image displayed on each of the terminal devices 20a in the reproduction area 1340 of the main screen 1300 on the screen of the target terminal device 20a. In this case, the terminal management unit 1101 displays the terminal image in real time acquired by the terminal image acquiring function in the reproduction area 1340. However, the terminal management unit 1101 may cause the storage unit 122 to acquire the latest log of the terminal image from the storage device 11 and to display the acquired log in the reproduction area 1340.

The user can specify a time in the past (first time) by operating the time management area 1380 of the main screen 1300. When the first time is specified by the target terminal device 20a, the terminal management unit 1101 uses the terminal image display control function to acquire the log of the terminal image at the specified first time from the storage device 11 and to display the log in the reproduction area 1340 of the main screen 1300 on the screen of the target terminal device 20a. Thus, the terminal management unit 1101 can provide the terminal image displayed in the past to the user.

The shared data management unit 1102 includes a shared data managing function, a shared data log generating function, and a shared data display control function. The shared data management unit 1102 uses the shared data managing function to manage at least one shared data. Moreover, the shared data management unit 1102 uses the shared data managing function to receive an access to the shared data from each of the terminal devices 20a participating in the project.

Furthermore, the shared data management unit 1102 uses the shared data managing function to set at least one of worksheets in one project. The worksheet is information indicating an index for managing shared data. The shared data management unit 1102 uses the shared data managing function to manage the shared data in association with any one of the worksheets. For example, the shared data management unit 1102 manages each of the shared data displayed in the work area 1360 in association with one of the worksheets.

The shared data management unit 1102 uses the shared data log generating function to generate a log of the managed shared data, and causes the storage unit 122 to store the generated log of the shared data associated with the time information in, for example, the storage device 11.

The shared data management unit 1102 uses the shared data display control function to display at least one of the shared data in the work area 1360 of the main screen 1300 on the screen of the target terminal device 20a. In this case, the shared data management unit 1102 uses the shared data display control function to display the managed latest shared data in the work area 1360. However, the shared data management unit 1102 may cause the storage unit 122 to acquire the latest log of the shared data from the storage device 11 and to display the acquired log in the work area 1360.

The user can specify a time in the past (second time) by operating the time management area 1380 of the main screen 1300. When the second time is specified by the target terminal device 20a, the shared data management unit 1102 uses the shared data display control function to acquire the log of the shared data at the second time from the storage device 11 and to display the log in the work area 1360 of the main screen 1300 on the screen of the target terminal device 20a. Thus, the shared data management unit 1102 can provide the shared data displayed in the past to the user.

The deliverables management unit 1103 includes a deliverable generating function and a deliverable display control function. The deliverables management unit 1103 uses the deliverable generating function to generate deliverable data including at least one shared data according to an operation for the operation button 1310b from the terminal device 20a of a specific user. The deliverables management unit 1103 causes the storage unit 122 to store the deliverable data generated by the deliverable display control function in, for example, the storage device 11. The deliverables management unit 1103 uses the deliverable display control function to acquire the deliverable data from the storage device 11 and display the acquired deliverable data in a deliverable display area provided in the main screen 1300 on the screen of the target terminal device 20a.

The time management unit 1105 displays information on the elapse of time, the image to be displayed, and the times of texts in the time management area 1380 of the main screen 1300 on the screen of the target terminal device 20a. The time management unit 1105 displays, for example, information indicating a current time, a thumbnail image indicating a terminal image in the past, and a thumbnail image indicating shared data in the past in the time management area 1380. Moreover, the time management unit 1105 displays the text associated with the time information collected by the text processing unit 1100 in the time management area 1380.

Furthermore, the time management unit 1105 displays, for example, a user interface for controlling the time (first time) of the log of the terminal image to be displayed in the reproduction area 1340 and the time of the log (second time) of the shared data to be displayed in the work area 1360, in the time management area 1380.

The text collection and the display processing in the server 10' according to the third embodiment will be explained next with reference to FIG. 6, FIG. 8, and FIG. 28. By referring to FIG. 28, when the operation button 1310c of the main screen 1300 is operated, a target terminal device 20a starts the processing in the flowchart of FIG. 8. In other words, the terminal device 20a requests the text conversion tool 21 from the server 10' in response to the operation for the operation button 1310c according to Step S100 of FIG. 8. The server 10' transmits the text conversion tool 21 to the terminal device 20a in response to the request.

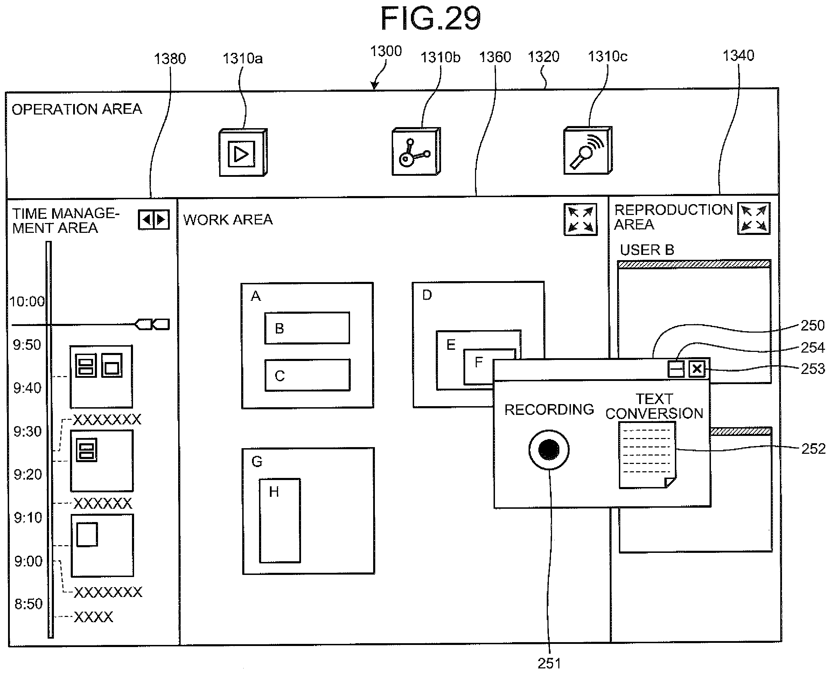

The terminal device 20a acquires the transmitted text conversion tool 21 by being downloaded (Step S101 of FIG. 8). Thus, the acquiring unit 223 (see FIG. 6) is formed in the terminal device 20a and the text conversion tool screen 250 illustrated in FIG. 9 is displayed on the terminal device 20a. FIG. 29 represents an example of indication of the text conversion tool screen 250 according to the third embodiment. In this example, the text conversion tool screen 250 is displayed in such a manner that it overlaps the main screen 1300.

As explained above, when the record button 251 is operated on the text conversion tool screen 250, the acquiring unit 223 (see FIG. 6) starts recording. Moreover, when the text conversion button 252 is operated, the text conversion processing of the sound data recorded according to an operation of the record button 251 is started (Step S102 of FIG. 8). By operating the minimize button 254, it is possible to minimize the text conversion tool screen 250 so that it does not disturb, for example, the work on the main screen 1300. Even when the text conversion tool screen 250 is minimized, the recording and the text conversion processing are continued.

The recording and the text conversion processing are executed until it is determined that the recording has been completed according to the processes at Step S103 to Step S106 of FIG. 8.

As explained in the process at Step S105 of FIG. 8, the terminal device 20a transmits the words and the time information acquired by the text conversion tool 21 to the server 10'. The words and the time information transmitted from the terminal device 20a are collected by the collecting unit 124 included in the text processing unit 1100 of the server 10'. The collecting unit 124 transmits the collected words and time information to the time management unit 1105. The collecting unit 124 also transmits the collected words and time information to, for example, the shared data management unit 1102. The shared data management unit 1102 causes the storage unit 122 to store the received words and time information in the storage device 11 in association with the worksheet corresponding to the work area 1360.

In the server 10', the time management unit 1105 displays the words i.e. text transmitted from the collecting unit 124 of the text processing unit 1100 in, for example, the time management area 1380 of the main screen 1300 according to the corresponding time information.

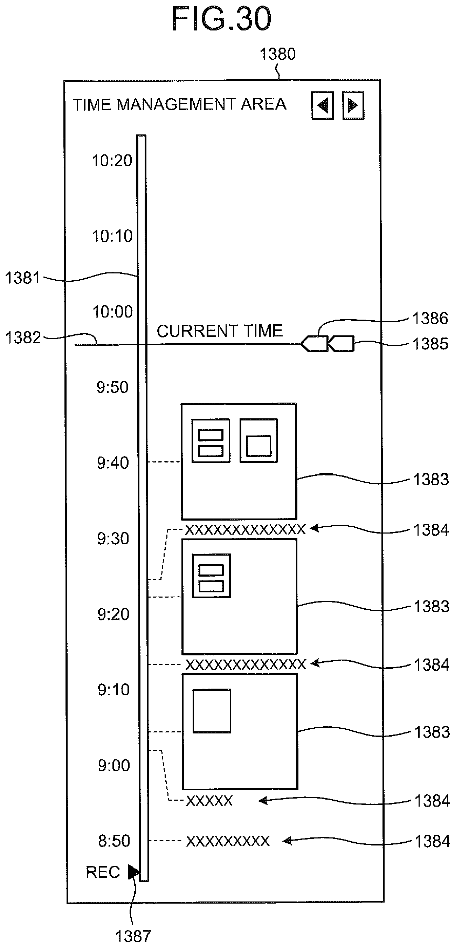

FIG. 30 represents an example of the time management area 1380 displayed by the time management unit 1105 according to the third embodiment. The time management unit 1105 displays a time line bar 1381 and a current time line 1382 in the time management area 1380.

The time line bar 1381 represents times in a predetermined time range including a current time. For example, in the example of FIG. 30, the time line bar 1381 represents times in a range from 8:50 to 10:20. The current time line 1382 represents a position corresponding to the current time on the time line bar 1381. In the example of FIG. 30, the current time line 1382 indicates 9:55 as the current time. The time management unit 1105 relatively moves the display range of the time line bar 1381 and the position of the current time line 1382 according to the elapse of time.

The time management unit 1105 further displays thumbnail images 1383, 1383, ··· of logs of the terminal images at positions corresponding to generation times of the logs of the terminal images on the time line bar 1381 in the time management area 1380. For example, the time management unit 1105 displays the thumbnail image 1383 of the terminal image at the time at which its content is updated in the time management area 1380.

The time management unit 1105 may display the thumbnail image 1383 of the shared data at the position corresponding to the generation time of the log of the terminal image on the time line bar 1381. For example, the time management unit 1105 displays the thumbnail image 1383 of the shared data at the time at which the content is updated. The time management unit 1105 switches which of the thumbnail image 1383 of the terminal image and the thumbnail image 1383 of the shared data is to be displayed in the time management area 1380 according to an operation of the user.

Moreover, the time management unit 1105 further displays the texts 1384, 1384, ··· transmitted from the collecting unit 124 of the text processing unit 1100 at positions each corresponding to the time information associated with the text on the time line bar 1381 in the time management area 1380.

In the example of FIG. 30, the recording and the text conversion processing are started at the time (e.g., 8:45) indicated by a recording start mark 1387. Therefore, the texts 1384, 1384, ···, associated with the time information after the time indicated by the recording start mark 1387, are displayed in the time management area 1380.

As illustrated in FIG. 30, a first time mark 1385 specifies a time (first time) of the log of the terminal image displayed in the reproduction area 1340. By moving the position of the first time mark 1385 to a position corresponding to the time in the past on the time line bar 1381 according to a user operation, the terminal image displayed in the past is displayed in the reproduction area 1340. A second time mark 1386 specifies a time (second time) of the log of the shared data displayed in the work area 1360. By moving the position of the second time mark 1386 to a position corresponding to the time in the past on the time line bar 1381 according to a user operation, the shared data displayed in the past is displayed in the work area 1360.

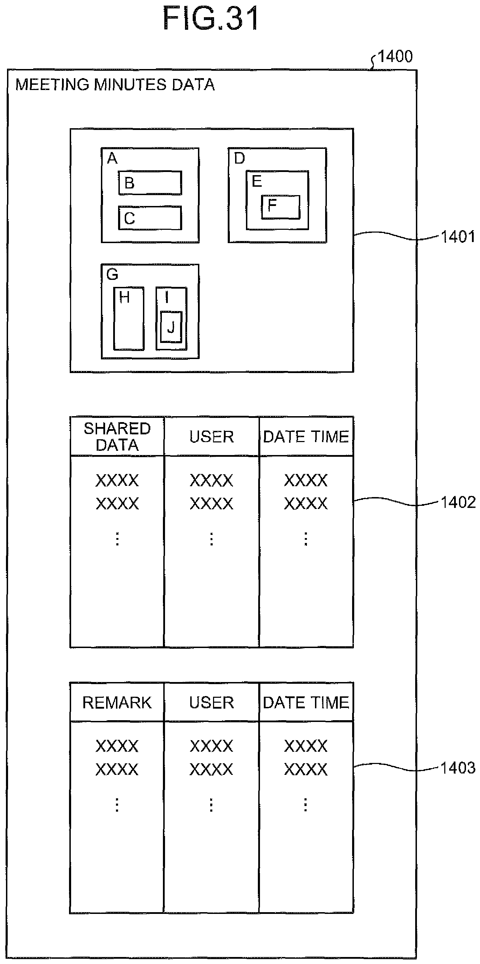

The server 10' according to the third embodiment can prepare meeting minutes related to generation of the deliverable data. FIG. 31 represents an example of meeting minutes data prepared by the deliverables management unit 1103 in the server 10' according to the third embodiment.

As illustrated in FIG. 31, meeting minutes data 1400 is data including deliverable data information 1401, a shared data list 1402, and a remark list 1403. The shared data list 1402 includes, for example, at least shared data associated with a worksheet corresponding to the deliverable data information 1401, a user who generates the shared data, and a date when it is generated. The remark list 1403 includes at least remark data (text) associated with the worksheet corresponding to the deliverable data information, a user who utters the remark of the remark data, and a date (time information) associated with the remark data. The deliverables management unit 1103 generates the meeting minutes data 1400, so that the contents of the deliverable data, the flow of proceedings, and the like can be checked afterwards.

It is possible to rewrite the contents of the remark list 1403 of the meeting minutes data 1400 based on the finished text explained in the second embodiment. For example, the time information included in the result data 340 explained with reference to FIG. 22, the information indicating each terminal device 20a, and the text of each part of the second text 330 are used to rewrite the date, the user, and the remark data of the remark list 1403 respectively.

Thus, in the third embodiment, it is possible to manage the terminal images and shared data used to generate deliverable data and the texts based on remarks made during the process of updating the shared data in a common time axis. Therefore, it becomes easier to grasp the process flow or the like when the deliverable data is generated, thus improving work efficiency.

According to the exemplary embodiments of the present invention, it is easy to generate meeting minutes based on recorded voices.

The method steps, processes, or operations described herein are not to be construed as necessarily requiring their performance in the particular order discussed or illustrated, unless specifically identified as an order of performance or clearly identified through the context. It is also to be understood that additional or alternative steps may be employed.

Further, any of the above-described apparatus, devices or units can be implemented as a hardware apparatus, such as a special-purpose circuit or device, or as a hardware/software combination, such as a processor executing a software program.

Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, nonvolatile memory, semiconductor memory, read-only-memory (ROM), etc.

Alternatively, any one of the above-described and other methods of the present invention may be implemented by an application specific integrated circuit (ASIC), a digital signal processor (DSP) or a field programmable gate array (FPGA), prepared by interconnecting an appropriate network of conventional component circuits or by a combination thereof with one or more conventional general purpose microprocessors or signal processors programmed accordingly.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA) and conventional circuit components arranged to perform the recited functions.

## Claims

1. An information processing system (1) comprising an information processing device (10) and a plurality of terminal devices (20) participating in a meeting, wherein
the information processing device includes:
a transmitting unit configured to transmit a text conversion tool (21) to the terminal devices (20) having participated in a project for forming an acquiring unit the acquiring unit acquiring a first text, in which a voice included in a sound acquired as a plurality of sound data recorded under different conditions according to a time series is converted into text, also acquiring each piece of time information indicating a time corresponding to each part of the first text in the sound, and transmitting the first text and the time information to the plurality of terminal devices (20), and
a collecting unit (124) configured to collect the sound, the each part of the first text, and the each piece of the time information corresponding to the each part acquired by the acquiring unit in each of one or more terminal devices (20) that include the text conversion tool (21) to form meeting minutes data,
**characterized by**
a project selection screen (1200) that causes a user to select one project that the user wishes to participate, the project selection screen (1200) being displayed on a display (214) of the terminal device (20),
and in that the information processing system is configured to display the meeting minutes data including the first text being obtained using the text conversion tool (21) and acquired from each of the plurality of terminal devices (20) that have participated in the same project, on a screen (1300) on the display of the respective terminal device (20) so that the terminal devices (20) can share the first text.

2. The information processing system (21) according to claim 1, wherein
the information processing device (20) further includes:
a detecting unit configured to detect a second part, in a second text, corresponding to a first part of the parts in respective first texts collected by the collecting unit from the terminal devices (20), and
an associating unit configured to associate the time information, to which the first part of the each piece of time information corresponds, with the second part.

3. The information processing system (1) according to claim 1 or 2, wherein
the information processing device (10) further includes:
a generating unit configured to generate display information for displaying the each part of the respective first texts collected by the collecting unit from the terminal devices (20) based on the each piece of time information according to a time series for each of the terminal devices (20).

4. The information processing system (1) according to any one of claims 1 to 3, wherein
each of the terminal devices (20) includes a sound pick-up unit configured to pick up the sound, and
the acquiring unit is configured to sequentially acquire the each part of the first text according to the sound picked up by the sound pick-up unit and to transmit the acquired part to the information processing device (10).

5. An information processing method executed by an information processing system (1) comprising an information processing device (10) and a plurality of terminal devices (20) participating in a meeting comprising:
transmitting a text conversion tool (21) to a terminal device (20) included in the plurality of terminal devices (10) having participated in a project for forming an acquiring unit to a plurality of terminal devices (20), the acquiring unit acquiring a first text in which a voice included in a sound acquired as a plurality of sound data recorded under different conditions according to a time series is converted into text, acquiring each piece of time information indicating a time corresponding to each part of the first text in the sound, and transmitting the the first text and the time information to the plurality of terminal devices (20), and
collecting the sound, the each part of the first text, and the each piece of the time information corresponding to the each part acquired by the acquiring unit in each of one or more terminal devices (20) that include the text conversion tool (21) to form meeting minutes data,
**characterized by**
causing a user to select one project that the user wishes to participate, the project selection screen (1200) being displayed on a display (214) of the terminal device (20),
and by displaying the meeting minutes data including the first text being obtained using the text conversion tool (21) and acquired from each of the plurality of terminal devices (20) that have participated in the same project, on a screen (1300) on the display of the respective terminal device (20) so that the terminal devices (20) can share the first text.

6. The information processing method according to claim 5, further comprising:
detecting a second part, in a second text, corresponding to a first part of the parts in respective first texts collected by the collecting from the terminal devices (20), and
associating the time information, to which the first part of the each piece of time information corresponds, with the second part.

7. The information processing method according to claim 5 or 6, further comprising:
generating display information for displaying the each part of the respective first texts collected by the collecting from the terminal devices (20) based on the each piece of time information according to a time series for each of the terminal devices (20).

8. The information processing method according to any one of claims 5 to 7, wherein
each of the terminal devices (20) includes a sound pick-up unit configured to pick up the sound, and
the acquiring sequentially acquires the each part of the first text according to the sound picked up by the sound pick-up unit and transmits the acquired part to the information processing device (10).

## Patentansprüche

1. Datenverarbeitungssystem (1), das eine Datenverarbeitungsvorrichtung (10) und mehrere Endgerätvorrichtungen (20), die an einer Sitzung teilnehmen, umfasst, wobei
die Datenverarbeitungsvorrichtung enthält:
eine Sendeeinheit, die konfiguriert ist, ein Textumsetzungs-Tool (21) an die Endgerätvorrichtungen (20), die an einem Projekt zum Bilden einer Erfassungseinheit teilgenommen haben, zu senden, wobei die Erfassungseinheit einen ersten Text erfasst, in dem eine Stimme, die in einem Ton enthalten ist, der als mehrere Tondaten, die unter verschiedenen Bedingungen gemäß einer Zeitreihe aufgenommen wurden, erfasst wurde, in Text umgesetzt wird, außerdem jeden Teil von Zeitinformationen erfasst, die eine Zeit angeben, die jedem Teil des ersten Textes in dem Ton entspricht, und den ersten Text und die Zeitinformationen an die mehreren Endgerätvorrichtungen (20) sendet, und
eine Sammeleinheit (124), die konfiguriert ist, den Ton, jeden Teil des ersten Textes und jeden Teil der Zeitinformationen, die jedem Teil entsprechen, der durch die Erfassungseinheit in jeder der einen oder der mehreren Endgerätvorrichtungen (20), die das Textumsetzungs-Tool (21) enthalten, erfasst wurde, zu sammeln, um Sitzungsprotokolldaten zu bilden,
**gekennzeichnet durch**
einen Projektauswahlbildschirm (1200), der bewirkt, dass ein Anwender ein Projekt auswählt, an dem der Anwender teilnehmen möchte, wobei der Projektauswahlbildschirm (1200) auf einer Anzeige (214) der Endgerätvorrichtung (20) angezeigt wird,
und **dadurch, dass** das Datenverarbeitungssystem konfiguriert ist, die Sitzungsprotokolldaten anzuzeigen, die den ersten Text enthalten, der unter Verwendung des Textumsetzungs-Tools (21) erhalten und von jeder der mehreren Endgerätvorrichtungen (20), die an demselben Projekt teilgenommen haben, erfasst wurde, auf einem Bildschirm (130) der Anzeige der jeweiligen Endgerätvorrichtung (20) anzuzeigen, so dass die Endgerätvorrichtungen (20) den ersten Text gemeinsam nutzen können.

2. Datenverarbeitungssystem (21) nach Anspruch 1, wobei
die Datenverarbeitungsvorrichtung (20) ferner enthält:
eine Detektionseinheit, die konfiguriert ist, einen zweiten Teil in einem zweiten Text, der einem ersten Teil der Teile in jeweiligen ersten Texten, die durch die Sammeleinheit von den Endgerätvorrichtungen (20) gesammelt wurden, entspricht, zu detektieren, und
eine Zuordnungseinheit, die konfiguriert ist, die Zeitinformationen, denen der erste Teil jedes Teils der Zeitinformationen entspricht, dem zweiten Teil zuzuordnen.

3. Datenverarbeitungssystem (1) nach Anspruch 1 oder 2, wobei
die Datenverarbeitungsvorrichtung (10) ferner enthält:
eine Erzeugungseinheit, die konfiguriert ist, Anzeigeinformationen zum Anzeigen jedes Teils der jeweiligen ersten Texte, die durch die Sammeleinheit von den Endgerätvorrichtungen (20) gesammelt wurden, anhand jedes Teils von Zeitinformationen gemäß einer Zeitreihe für jede der Endgerätvorrichtungen (20) zu erzeugen.

4. Datenverarbeitungssystem (1) nach einem der Ansprüche 1 bis 3, wobei jede der Endgerätvorrichtungen (20) eine Tonaufnahmeeinheit enthält, die konfiguriert ist, den Ton aufzunehmen, und
die Erfassungseinheit konfiguriert ist, sequenziell jeden Teil des ersten Textes gemäß dem durch die Tonaufnahmeeinheit aufgenommenen Tons zu erfassen und den erfassten Teil an die Datenverarbeitungsvorrichtung (10) zu senden.

5. Datenverarbeitungsverfahren, das durch ein Datenverarbeitungssystem (1) ausgeführt wird, das eine Datenverarbeitungsvorrichtung (10) und mehrere Endgerätvorrichtungen (20) umfasst, die an einer Sitzung teilnehmen, und das umfasst:
Senden eines Textumsetzungs-Tools (21) an eine Endgerätvorrichtung (20), die in den mehreren Endgerätvorrichtungen (10) enthalten ist, die an einem Projekt zum Bilden einer Erfassungseinheit teilgenommen haben, an mehrere Endgerätvorrichtungen (20), wobei die Erfassungseinheit einen ersten Text erfasst, in dem eine Stimme, die in einem Ton enthalten ist, der als mehrere Tondaten erfasst wurde, die unter verschiedenen Bedingungen gemäß einer Zeitreihe aufgenommen wurden, in Text umgesetzt wird, Erfassen jedes Teils von Zeitinformationen, die eine Zeit angeben, die jedem Teil des ersten Textes in dem Ton entspricht, und Senden des ersten Textes und der Zeitinformationen an die mehreren Endgerätvorrichtungen (20), und
Sammeln des Tons, jedes Teils des ersten Textes und jedes Teils der Zeitinformationen, die jedem Teil entsprechen, der durch die Erfassungseinheit in jeder der einen oder der mehreren Endgerätvorrichtungen (20), die das Textumsetzungs-Tool (21) enthalten, erfasst wurden, um Sitzungsprotokolldaten zu bilden,
**gekennzeichnet durch**
Bewirken, dass ein Anwender ein Projekt auswählt, an dem der Anwender teilnehmen möchte, wobei der Projektauswahlbildschirm (1200) auf einer Anzeige (214) der Endgerätvorrichtung (20) angezeigt wird,
und durch Anzeigen der Sitzungsprotokolldaten, die den ersten Text enthalten, der unter Verwendung des Textumsetzungs-Tools (21) erhalten wurde und von jeder der mehreren Endgerätvorrichtungen (20) erfasst wurde, die an demselben Projekt teilgenommen haben, auf einem Bildschirm (130) der Anzeige der jeweiligen Endgerätvorrichtung (20), so dass die Endgerätvorrichtungen (20) den ersten Text gemeinsam nutzen können.

6. Datenverarbeitungsverfahren nach Anspruch 5, das ferner umfasst:
Detektieren eines zweiten Teils in einem zweiten Text, der einem ersten Teil der Teile in jeweiligen ersten Texten, die durch das Sammeln von den Endgerätvorrichtungen (20) gesammelt wurden, entspricht, und
Zuordnen der Zeitinformationen, denen der erste Teil jedes Teils der Zeitinformationen entspricht, zu dem zweiten Teil.

7. Datenverarbeitungsverfahren nach Anspruch 5 oder 6, das ferner umfasst:
Erzeugen von Anzeigeinformationen zum Anzeigen jedes Teils der jeweiligen ersten Texte, die durch das Sammeln von den Endgerätvorrichtungen (20) gesammelt wurden, anhand jedes Teils von Zeitinformationen gemäß einer Zeitreihe für jede der Endgerätvorrichtungen (20).

8. Datenverarbeitungsverfahren nach einem der Ansprüche 5 bis 7, wobei
jede der Endgerätvorrichtungen (20) eine Tonaufnahmeeinheit enthält, die konfiguriert ist, den Ton aufzunehmen, und
die Erfassung sequenziell jeden Teil des ersten Textes gemäß dem durch die Tonaufnahmeeinheit aufgenommenen Tons erfasst und den erfassten Teil an die Datenverarbeitungsvorrichtung (10) sendet.

## Revendications

1. Système de traitement d'informations (1) comprenant un dispositif de traitement d'informations (10) et une pluralité de dispositifs de terminal (20) participant à une réunion, dans lequel
le dispositif de traitement d'informations inclut :
une unité de transmission configurée pour transmettre un outil de conversion de texte (21) aux dispositifs de terminal (20) ayant participé à un projet pour former une unité d'acquisition, l'unité d'acquisition acquérant un premier texte, dans lequel une voix, incluse dans un son acquis sous forme de pluralité de données de son enregistrées dans des conditions différentes selon une série temporelle, est convertie en texte, également acquérant chaque élément d'informations temporelles indiquant un temps correspondant à chaque partie du premier texte dans le son, et transmettant le premier texte et les informations temporelles à la pluralité de dispositifs de terminal (20), et
une unité de collecte (124) configurée pour collecter le son, chaque partie du premier texte, et chaque élément des informations temporelles correspondant à chaque partie acquise par l'unité d'acquisition dans chacune d'un ou de plusieurs dispositifs de terminal (20) qui incluent l'outil de conversion de texte (21) pour former des données de compte rendu de réunion,
**caractérisé par**
un écran de sélection de projet (1200) qui donne l'instruction à un utilisateur de sélectionner un projet auquel l'utilisateur souhaite participer, l'écran de sélection de projet (1200) étant affiché sur un appareil d'affichage (214) du dispositif de terminal (20),
et en ce que le système de traitement d'informations est configuré pour afficher les données de compte rendu de réunion, incluant le premier texte obtenu en utilisant l'outil de conversion de texte (21) et acquis à partir de chacun de la pluralité de dispositifs de terminal (20) qui ont participé au même projet, sur un écran (1300) sur l'appareil d'affichage du dispositif de terminal respectif (20) pour que les dispositifs de terminal (20) puissent partager le premier texte.

2. Système de traitement d'informations (21) selon la revendication 1, dans lequel
le dispositif de traitement d'informations (20) inclut en outre :
une unité de détection configurée pour détecter une seconde partie, dans un second texte, correspondant à une première partie des parties dans des premiers textes respectifs collecté par l'unité de collecte à partir des dispositifs de terminal (20), et
une unité d'association configurée pour associer les informations temporelles, auxquelles la première partie de chaque élément d'informations temporelles correspond, à la seconde partie.

3. Système de traitement d'informations (1) selon la revendication 1 ou 2, dans lequel
le dispositif de traitement d'informations (10) inclut en outre :
une unité de génération configurée pour générer des informations d'affichage pour afficher chaque partie des premiers textes respectifs collectés par l'unité de collecte à partir des dispositifs de terminal (20) sur la base de chaque élément d'informations temporelles selon une série temporelle pour chacun des dispositifs de terminal (20).

4. Système de traitement d'informations (1) selon l'une quelconque des revendications 1 à 3, dans lequel
chacun des dispositifs de terminal (20) inclut une unité de capteur de son configurée pour capter le son, et
l'unité d'acquisition est configurée pour séquentiellement acquérir chaque partie du premier texte selon le son capté par l'unité de capteur de son et pour transmettre la partie acquise au dispositif de traitement d'informations (10).

5. Procédé de traitement d'informations exécuté par un système de traitement d'informations (1) comprenant un dispositif de traitement d'informations (10) et une pluralité de dispositifs de terminal (20) participant à une réunion, comprenant :
la transmission d'un outil de conversion de texte (21) à un dispositif de terminal (20) inclus dans la pluralité de dispositifs de terminal (10) ayant participé à un projet pour former une unité d'acquisition pour une pluralité de dispositifs de terminal (20), l'unité d'acquisition acquérant un premier texte dans lequel une voix, incluse dans un son acquis sous forme de pluralité de données de son enregistrées dans des conditions différentes selon une série temporelle, est convertie en texte, acquérant chaque élément d'informations temporelles indiquant un temps correspondant à chaque partie du premier texte dans le son, et transmettant le premier texte et les informations temporelles à la pluralité de dispositifs de terminal (20), et
la collecte du son, de chaque partie du premier texte, et de chaque éléments des informations temporelles correspondant à chaque partie acquis par l'unité d'acquisition dans chacune d'un ou plusieurs dispositifs de terminal (20) qui incluent l'outil de conversion de texte (21) pour former des données de compte rendu de réunion,
**caractérisé par**
l'instruction à un utilisateur de sélectionner un projet auquel l'utilisateur souhaite participer, l'écran de sélection de projet (1200) étant affiché sur un appareil d'affichage (214) du dispositif de terminal (20),
et par l'affichage des données de compte rendu de réunion, incluant le premier texte obtenu en utilisant l'outil de conversion de texte (21) et acquis à partir de chacun de la pluralité de dispositifs de terminal (20) qui ont participé au même projet, sur un écran (1300) sur l'appareil d'affichage du dispositif de terminal respectif (20) pour que les dispositifs de terminal (20) puissent partager le premier texte.

6. Procédé de traitement d'informations selon la revendication 5, comprenant en outre :
la détection d'une seconde partie, dans un second texte, correspondant à une première partie des parties dans des premiers textes respectifs collectés par la collecte à partir des dispositifs de terminal (20), et
l'association des informations temporelles, auxquelles la première partie de chaque élément d'informations temporelles correspond, à la seconde partie.

7. Procédé de traitement d'informations selon la revendication 5 ou 6, comprenant en outre :
la génération d'informations d'affichage pour afficher chaque partie des premiers textes respectifs collectés par la collecte à partir des dispositifs de terminal (20) sur la base de chaque élément d'informations temporelles selon une série temporelle pour chacun des dispositifs de terminal (20).

8. Procédé de traitement d'informations selon l'une quelconque des revendications 5 à 7, dans lequel chacun des dispositifs de terminal (20) inclut une unité de capteur de son configurée pour capter le son, et
l'acquisition acquiert séquentiellement chaque partie du premier texte selon le son capté par l'unité capteur de son et transmet la partie acquise au dispositif de traitement d'informations (10).
